# EUROPÄISCHE PATENTSCHRIFT

(11) **EP 3 049 184 B1**
(45) Veröffentlichungstag und Bekanntmachung des Hinweises auf die Patenterteilung: **29.06.2022**
(21) Anmeldenummer: 14752560.4
(22) Anmeldetag: 05.08.2014
(51) Int. Cl.: B01J 4/00, B01J 19/32, B01D 3/00, B01D 3/32, B01D 53/18, C10G 7/00, C10G 7/06

(54) **KOLONNE MIT FLÜSSIGKEITSVERTEILER UND STOFFAUSTAUSCHBODEN AUS WINKELPROFILEN**
COLUMN WITH LIQUID DISTRIBUTOR AND ANGLED PROFILE PACKING ELEMENTS
COLONNE AVEC DISTRIBUTEUR DE LIQUIDE DOTÉE D'UN GARNISSAGE PROFILÉ ANGULAIRE

(30) Priorität: 25.09.2013 EP 13004650
(43) Veröffentlichungstag der Anmeldung: 03.08.2016
(73) Patentinhaber: Linde GmbH, 82049 Pullach (DE)
(72) Erfinder: ALZNER, Gerhard, 81476 München (DE); MATTEN, Christian, 82049 Pullach (DE)
(74) Vertreter: Meilinger, Claudia Sabine
(86) Internationale Anmeldenummer: PCT/EP2014/002147
(87) Internationale Veröffentlichungsnummer: WO 2015/043698

(56) Entgegenhaltungen:
- EP-A1- 0 367 525
- EP-A2- 1 093 850
- DE-A1- 10 051 523
- DE-A1-102006 014 334
- FR-A1- 2 086 365
- US-A- 2 010 010
- US-A- 2 470 652
- US-A- 4 476 069

## Beschreibung

Die Erfindung betrifft eine Kolonne, insbesondere zum Stoff- und/oder Energieaustausch zwischen einer flüssigen Phase sowie einer im Gegenstrom dazu geführten gasförmigen Phase.

Derartige Kolonnen weisen einen entlang einer Längsachse erstreckten Mantel auf, der einen Innenraum der Kolonne umschließt, sowie zumindest ein Stoffaustauschelement, das sich über einen quer zur Längsachse verlaufenden Kolonnenquerschnitt im Innenraum der Kolonne erstreckt. Eine solche Kolonne weist des Weiteren zumindest einen Flüssigkeitsverteiler auf, der dazu ausgebildet ist, das mindestens eine Stoffaustauschelement mit einer flüssigen Phase zu beaufschlagen, um einen Stoff- und/oder Energieaustausch mit einer im Gegenstrom durch das mindestens eine Stoffaustauschelement geführten gasförmigen Phase zu ermöglichen.

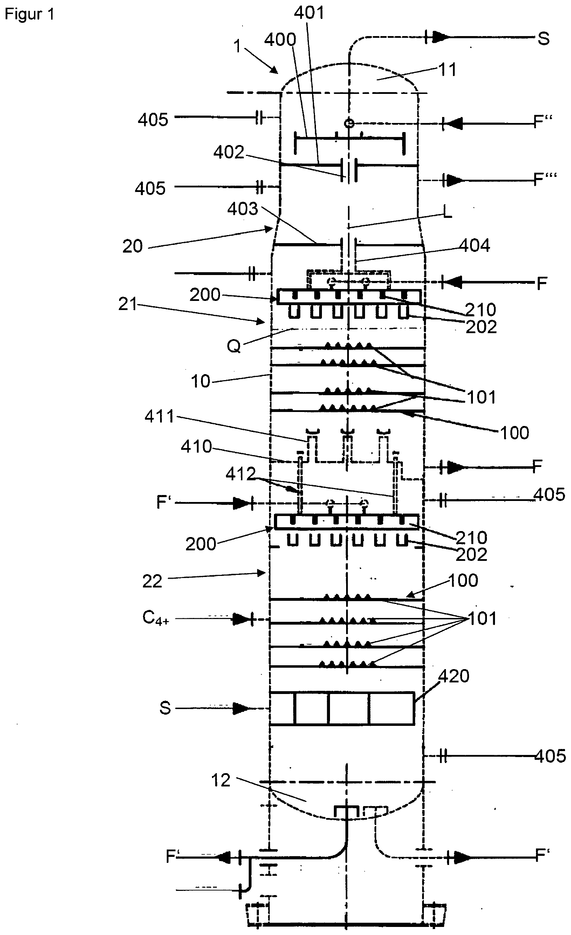

Eine derartige Kolonne ist beispielsweise in EP 0 367 525 A1 beschrieben. Bei dieser wird als Stoffaustauschelement ein Packungsbett 14 oder eine regellose Füllkörperschüttung 14A verwendet. Eine weitere Kolonne der eingangs genannten Art ist in US 2 010 010 offenbart. Als Ablaufelemente bzw. Ablaufflächen für die flüssige Phase dienen in dieser Kolonne jeweils horizontal ausgerichtete Lamellen oder Platten 7 (Fig. 1), die jeweils in vertikaler und horizontaler Richtung beabstandet zueinander angeordnet sind. Weitere Stoffaustauschelemente sind in der FR 2 086 365 A1 oder US 2 470 652 offenbart. Eine spezielle Vorrichtung zur gleichmäßigen Verteilung einer Flüssigkeit in einer Gegenstrom-Kolonne wird in der DE 100 51 523 A1 beschrieben. Die DE 10 2006 014 334 A1 bezieht sich auf Verfahren zum Betreiben einer Gegenstrom-Stoffaustauschkolonne, in welcher eine Zuspeiseflüssigkeit mit einem Flüssigkeitsverteiler gezielt ungleich verteilt wird, um eine gleichmäßige Verteilung der Summe aus von oben herabrieselnder Flüssigkeit aus einem ersten, oberen Kolonnenabschnitt und der Zuspeiseflüssigkeit in einem zweiten, unteren Stoffaustauschabschnitt zu erreichen.

Kolonnen der eingangs genannten Art werden z.B. auch als Ölwaschkolonnen (sogenannte primary fractionator), sowie als Wasserquenchkolonnen (sogenannter quench water tower), aber auch als Kolonnen zur atmosphärischen und VakuumDestillation bei der Rohölverarbeitung verwendet. Aufgrund der anfallenden Kondensate mit längerkettigen Kohlenwasserstoffen leiden solche Kolonnen unter großer Verschmutzung, die sich negativ auf die eingesetzten Stoffaustauschböden bzw. -elemente auswirkt.

Das größte Problem besagter Ölwaschkolonnen ist die Verschmutzung der einzelnen Stoffaustauschböden durch Polymerbildung (so genanntes Fouling). Dabei liegen der Polymerbildung im Wesentlichen zwei Mechanismen zugrunde.

Zum einen enthalten die kondensierenden Komponenten Monomere (dies sind beispielsweise ungesättigte Kohlenwasserstoffe wie Naphtene, Indene oder Styrene). Diese Monomere können unter bestimmten Bedingungen Polymere bilden. Diese Bedingungen wären polymerisationsfähiger Temperaturbereich, Auftreten der Monomere in hinreichend großer Konzentration, große Verweilzeit auf den Einbauten und die Anwesenheit von Rost. Diese Einflüsse werden als "fouling factors" bezeichnet. Optimalerweise ist das Zustandekommen aller vier Bedingungen zu verhindern.

Zum anderen verdampft der größte Teil der flüssigen Kohlenwasserstoffe, die dem Benzinabschnitt als erstes Waschmittel aufgegeben werden, über den Benzinabschnitt auf dem Weg nach unten. Dies führt dazu, dass am unteren Ende des Benzinabschnitts die geringste Flüssigkeitsmenge und somit die größte Verweildauer der Flüssigkeit auf den Stoffaustauschböden bzw. -elementen vorhanden ist. Zusätzlich steigen bei steigendem Rückfluss die Verdampfung der längerkettigen Kohlenwasserstoffe und damit die Temperatur des gasförmigen Kopfproduktes an.

Hiervon ausgehend liegt daher der vorliegenden Erfindung die Aufgabe zugrunde, eine Kolonne der eingangs genannten Art verschmutzungsunanfälliger zu gestalten, ohne insbesondere allzu große Einbußen hinsichtlich der Austauschwirksamkeit und Kapazität hinnehmen zu müssen.

Dieses Problem wird durch eine Kolonne mit den Merkmalen des Anspruchs 1 gelöst.

Danach ist vorgesehen, dass der Stoffaustauschboden eine Mehrzahl an parallel und beabstandet zu einander verlaufenden Ablaufelementen, beispielsweise in Form von Winkelprofilen, aufweist, die sich jeweils entlang des besagten Kolonnenquerschnitts erstrecken, wobei die Ablaufelemente jeweils eine erste und eine zweite entlang des Kolonnenquerschnitts erstreckte (insbesondere ebene) Ablauffläche aufweisen, wobei die beiden Ablaufflächen entlang der Längsachse des Mantels der Kolonne in Richtung auf den Flüssigkeitsverteiler winklig aufeinander zu laufen und unter Ausbildung einer entlang des besagten Kolonnenquerschnitts erstreckten Kante aufeinandertreffen, wobei der Flüssigkeitsverteiler dazu ausgebildet ist, die flüssige Phase definiert auf die Kanten der Stoffaustauschelemente aufzugeben, so dass die auf das jeweilige Ablaufelement aufgegebene flüssige Phase zu beiden Seiten der Kante über die Ablaufflächen vom jeweiligen Ablaufelement abfließt. Die Kanten der Ablaufelemente können auch abgerundet ausgebildet sein. Vorzugsweise weisen die Ablaufelemente eine akzentuierte Kante auf.

Weiterhin weist der Flüssigkeitsverteiler erfindungsgemäß eine Mehrzahl an Auslässen auf, durch die hindurch die flüssige Phase auf die Kanten der Ablaufelemente aufgebbar ist, wobei die Auslässe jeweils lotrecht oberhalb einer Kante eines zugeordneten Ablaufelementes angeordnet sind. Weiterhin weist der Flüssigkeitsverteiler eine Mehrzahl an Endverteilerkanälen auf, die sich jeweils entlang des besagten Kolonnenquerschnitts sowie quer zu den Ablaufelementen erstrecken. Weiterhin weisen die Endverteilerkanäle gemäß einer ersten Variante (a) jeweils einen entlang des Kolonnenquerschnitts erstreckten Boden und zwei davon abgehende Seitenwände auf, wobei die besagten Seitenwände jeweils einen oberen Rand aufweisen, wobei die Auslässe in Form von - beispielsweise rechteckförmigen - Ausnehmungen an den beiden oberen Rändern ausgebildet sind. Bei einer zweiten Variante (b) sind die Endverteilerkanäle rohrförmig ausgebildet und weisen eine umlaufende Wandung auf, wobei die besagten Auslässe der Endverteilerkanäle als Durchgangsöffnungen in diesen Wandungen ausgebildet sind.

Bei Ablaufelementen in Form von (beispielsweise gleichschenkligen) Winkelprofilen weisen diese zwei Schenkel auf, die entlang der Längsachse in Richtung auf den Flüssigkeitsverteiler winklig, insbesondere rechtwinklig, aufeinander zu laufen und unter Ausbildung einer entlang des Kolonnenquerschnitts erstreckten Kante aufeinandertreffen. Die Ablaufflächen des jeweiligen Ablaufelementes bzw. Winkelprofils werden dann durch die nach oben gewandten (d.h., dem Flüssigkeitsverteiler zugewandten) Oberseiten der Schenkel gebildet.

Vorzugsweise schließen die Schenkel bzw. Ablaufflächen einen Winkel im Bereich von 80° bis 100° ein, insbesondere einen Winkel von 90°. Die Breite der Ablaufflächen senkrecht zu deren Längserstreckungsrichtung beträgt vorzugsweise 40mm bis 150mm, vorzugsweise 100mm.

Die besagte Längsachse der Kolonne bzw. des Mantels der Kolonne erstreckt sich bevorzugt - bezogen auf eine bestimmungsgemäß angeordnete und betriebsbereite Kolonne - entlang der Vertikalen. Der Mantel der Kolonne ist zumindest abschnittsweise zylindrisch ausgebildet, wobei die Längsachse der Kolonne in diesem Fall mit der Zylinderachse des Mantels zusammenfällt.

Der erfindungsgemäße Stoffaustauschboden ermöglicht mit Vorteil die Erzeugung einer Vielzahl von Vorhängen aus der flüssigen Phase, nämlich durch die von den Ablaufflächen abfließenden flüssigen Phasen, sowie ggf. zusätzlich die Erzeugung einer Zweiphasenschicht auf den Ablaufflächen, was zu einem verbesserten Wirkungsgrad beiträgt. Diesbezüglich hat sich in Versuchen gezeigt, dass die erfindungsgemäßen Stoffaustauschböden, die auch als Kaskadenböden bezeichnet werden, mit Dual-Flow-Böden vergleichbar sind. Hierbei handelt es sich um Siebböden ohne Ablaufschacht mit relativ großen Durchgangsöffnungen, insbesondere mit einem Durchmesser im Bereich von 20mm bis 40mm, bei denen die Gasphase und die flüssige Phase im Gegenstrom durch die Durchgangsöffnungen strömen.

Weiterhin hat sich in Versuchen gezeigt, dass die besagten Kaskadenböden hinsichtlich der Kapazität und des Wirkungsgrades den ein-flutigen side-to-side baffels überlegen sind. Bei side-to-side baffles handelt es sich um ein- oder mehrflutige geneigte oder waagerechte Kolonnenböden, die insbesondere durchgehend ausgebildet sind, also keine Durchgangsöffnungen aufweisen, und die sich lediglich über einen Teil des Kolonnenquerschnitts erstrecken, wobei übereinander angeordnete Kolonnenböden so zueinander versetzt sind, dass die von einem Kolonnenboden abfließende Phase auf den darunter angeordneten Kolonnenboden gelangt. Z.B. können derartige Kolonnenböden abwechselnd auf einander gegenüberliegenden Seiten der Kolonne angeordnet sein, so dass die flüssige Phase auf ihrem Weg nach unten in der Kolonne hin und her strömt.

Aufgrund ihres Aufbaus sind die erfindungsgemäßen Stoffaustauschböden mit Vorteil verschmutzungsunanfällig, da bspw. keine kleinflächigen Öffnungen vorhanden sind, die schnell zuwachsen könnten. Der Wirkungsgrad ist relativ hoch, und zwar gemäß Versuchen etwa doppelt so hoch wie der von ein- oder zweiflutigen side-to-side baffels. Des Weiteren übersteigt ihre Kapazität die der side-to-side baffles. Gleichfalls weisen die erfindungsgemäßen Stoffaustauschböden aufgrund der winkligen Ablaufelemente eine vergleichsweise hohe strukturelle Festigkeit auf, wobei jedoch bevorzugt Unterzüge eingesetzt werden (siehe unten).

Die Ablaufelemente bzw. deren Ablaufflächen (oder die besagten Schenkel) sind bevorzugt längs erstreckt ausgebildet, d.h., sie weisen entlang ihrer Längserstreckungsrichtung eine größere Länge auf als quer zu dieser Richtung, und erstrecken sich bevorzugt über den gesamten Kolonnenquerschnitt, d.h., von einem Innenseitenbereich des Mantels hin zu einem gegenüberliegenden Innenseitenbereich des Mantels der Kolonne. Die Ablaufelemente können dabei aus mehreren Segmenten, die jeweils für sich wie ein Ablaufelement ausgebildet sind und die entlang der Längserstreckungsrichtung hintereinander angeordnet sind, zusammengesetzt sein. Ein zwischen zwei solchen Segmenten vorhandener Spalt (der die Ablaufflächen des zusammengesetzten Ablaufelementes unterbricht) kann durch ein Kappenelement, das an den beiden Ablaufflächensegmenten des jeweiligen Segments anliegt, verdeckt werden, so dass sich insgesamt ein einheitlich anmutendes Ablaufelement ergibt, das sich insbesondere im Wesentlichen entlang des gesamten Kolonnenquerschnitts von einem Innenseitenbereich des Mantels der Kolonne zu einem gegenüberliegenden Innenseitenbereich des Mantels der Kolonne erstreckt.

Der Stoffaustauschboden erstreckt sich vorzugsweise über den gesamten Kolonnenquerschnitt, wobei die parallel zueinander verlaufenden Ablaufelemente vorzugsweise quer zu Ihrer Längserstreckungsrichtung äquidistant zueinander angeordnet sind, so dass je zwei benachbarte Ablaufelemente eine längliche Durchgangsöffnung oder Lücke des Stoffaustauschbodens definieren, durch die hindurch eine gasförmige Phase in der Kolonne entlang der Längsachse des Mantels der Kolonne aufsteigen kann.

Der Stoffaustauschboden weist weiterhin bevorzugt einen Tragring auf, über den der Stoffaustauschboden insbesondere am Mantel festgelegt ist, wobei der Tragring vorzugsweise an einer Innenseite des Mantels der Kolonne entlang des besagten Kolonnenquerschnitts umläuft. Die Ablaufelemente liegen dabei bevorzugt jeweils mit einem ersten und einem gegenüberliegenden zweiten Endbereich auf dem Tragring auf. Hierbei ist einer der Endbereiche über ein Festlager auf dem Tragring gelagert, der andere Endbereich über ein Gleitlager. Besteht ein Ablaufelement aus mehreren Segmenten, so ist bevorzugt pro Segment ein Festlager vorgesehen, die anderen Lager des betreffenden Segmentes sind bevorzugt Gleitlager.

Des Weiteren können die Stoffaustauschelemente durch einen, zwei oder mehrere parallel zueinander verlaufende, entlang des besagten Kolonnenquerschnitts erstreckte Träger (insbesondere Profilträger) unterstützt sein, die quer zu den Ablaufelementen verlaufen und auf denen die Ablaufelemente bzw. deren Komponenten (siehe oben) aufliegen. Derartige Träger greifen dabei mit Ihren einander gegenüberliegenden Endbereichen vorzugsweise jeweils unter den Tragring und sind dabei jeweils auf einer Seite über ein unterhalb des Tragrings angeordnetes Gleitlager mit dem Mantel verbunden und auf der anderen Seite über ein unterhalb des Tragrings angeordnetes Festlager.

Vorzugsweise weist die Kolonne eine Mehrzahl derartiger Stoffaustauschböden auf, die entlang der Längsachse des Kolonnenmantels übereinander angeordnet sind, wobei die Stoffaustauschböden bevorzugt zueinander parallel verlaufen. Bevorzugt sind die Ablaufelemente zweier benachbarter Stoffaustauschböden versetzt zueinander angeordnet, so dass flüssige Phase, die von einer Ablauffläche eines oberen Ablaufelementes abfließt, auf eine Ablauffläche eines darunter versetzt angeordneten unteren Ablaufelementes auftrifft.

Wie bereits dargelegt, weist der mindestens eine Flüssigkeitsverteiler eine Mehrzahl an Auslässen auf, über die die flüssige Phase auf die Kanten der Ablaufelemente bzw. Winkelprofile aufgebbar ist. Die Auslässe sind hierzu jeweils lotrecht entlang der Längsachse des Mantels der Kolonne oberhalb einer Kante eines zugeordneten Ablaufelementes bzw. Winkelprofils angeordnet.

Hierdurch ist mit Vorteil gewährleistet, dass die volle Flüssigkeitsmenge bereits am obersten Stoffaustauschboden zur Verfügung steht, im Gegensatz zu Sprühdüsen, bei denen regelmäßig 30% bis 50% der Flüssigkeit in den Spalten bzw. Durchgangsöffnungen zwischen den Ablaufelementen landen und erst auf tieferen Stoffaustauschböden wirksam wird. Vorzugsweise ist der Flüssigkeitsverteiler also dazu ausgebildet, die flüssige Phase vollständig auf die Ablaufelemente, insbesondere deren Kanten, aufzugeben. Weiterhin ist der Flüssigkeitsaustrag über den Kopf der jeweiligen Kolonne bei versprühter Flüssigkeit (kleine Tropfen) unvorteilhafter Weise größer.

Wie bereits dargelegt, weist der mindestens eine Flüssigkeitsverteiler eine Mehrzahl an Endverteilerkanälen auf, die sich jeweils entlang des besagten Kolonnenquerschnitts sowie quer zu den Ablaufelementen bzw. deren jeweiliger Längserstreckungsrichtung, bevorzugt längs über den im Wesentlichen gesamten Kolonnenquerschnitt, erstrecken.

Die besagten Endverteilerkanäle können jeweils einen entlang des Kolonnenquerschnitts erstreckten Boden und zwei davon abgehende längs erstreckte, einander gegenüber liegende Seitenwände aufweisen, wobei die besagten Seitenwände jeweils einen oberen Rand aufweisen, und wobei die Auslässe in Form von beispielsweise rechteckförmigen Ausnehmungen an den beiden oberen Rändern ausgebildet sind. Die Endverteilerkanäle sind des Weiteren stirnseitig bevorzugt je durch eine weitere Seitenwand begrenzt. Die besagten Ausnehmungen oder Ausschnitte an den Rändern der Seitenwände weisen dabei insbesondere jeweils eine Unterkante auf, über die die flüssige Phase aus dem jeweiligen Endverteilerkanal auf die darunter liegende Kante eines Ablaufelementes strömt, wobei jene Unterkante entlang der Längsachse der Kolonne zum jeweiligen Boden des betrachteten Endverteilerkanals beabstandet ist, so dass der jeweilige Endverteilerkanal theoretisch bis hin zu den besagten Unterkanten der Auslässe Verschmutzungen sammeln kann, wobei der jeweilige Endverteilerkanal dann immer noch die zu verteilende flüssige Phase definiert über die Auslässe bzw. Ausnehmungen auf den zugeordneten Stoffaustauschboden geben kann.

Weiterhin weist der Flüssigkeitsverteiler bevorzugt zumindest zwei zueinander parallele, entlang der Längsachse des Kolonnenmantels oberhalb der Endverteilerkanäle angeordnete, längs erstreckte Vorverteilerkanäle zum Speisen der Endverteilerkanäle mit der flüssigen Phase auf, wobei sich die Vorverteilerkanäle insbesondere entlang des besagten Kolonnenquerschnitts erstrecken. Vorzugsweise verlaufen die Vorverteilerkanäle senkrecht zu den Endverteilerkanälen. Die Vorverteilerkanäle können über zumindest einen Ausgleichskanal strömungstechnisch miteinander verbunden sein, so dass sich ein etwaiger Pegelunterschied der flüssigen Phase in den Vorverteilerkanälen über den mindestens einen Ausgleichskanal ausgleichen könnte.

Weiterhin weisen auch die Vorverteilerkanäle vorzugsweise jeweils einen entlang des Kolonnenquerschnitts erstreckten Boden und zwei davon abgehende, längs erstreckte sowie einander gegenüber liegende Seitenwände auf, und wobei die besagten Seitenwände jeweils einen oberen Rand aufweisen, wobei an jenen Rändern Auslässe in Form von insbesondere rechteckförmigen Ausnehmungen ausgebildet sind, über die die flüssige Phase in jeweils einen zugeordneten Endverteilerkanal einleitbar ist. Vorzugsweise sind jene Auslässe der Vorverteilerkanäle jeweils lotrecht oberhalb eines zugeordneten Endverteilerkanals angeordnet. Auch hier weisen die besagten Ausnehmungen oder Ausschnitte an den Rändern jeweils eine Unterkante auf, über die die flüssige Phase aus dem jeweiligen Vorverteilerkanal in einen darunter liegenden Endverteilerkanal gelangt, wobei jene Unterkante entlang der Längsachse des Kolonnenmantels zum jeweiligen Boden des betrachteten Vorverteilerkanals beabstandet ist, so dass der jeweilige Vorverteilerkanal wiederum bis hin zu den besagten Unterkanten seiner Auslässe zuwachsen kann und dennoch die zu verteilende flüssige Phase über die Auslässe bzw. Ausnehmungen auf den jeweils zugeordneten Endverteilerkanal geben kann. Des Weiteren sind die Vorverteilerkanäle jeweils stirnseitig durch eine weitere Seitenwand begrenzt.

Vorzugsweise werden die besagten Vorverteilerkanäle über zumindest je ein Einspeiserohr, vorzugsweise über je zwei Einspeiserohre mit der flüssigen Phase beschickt, wobei sich jene Einspeiserohre zumindest abschnittsweise entlang der Längsachse des Mantels der Kolonne erstrecken, so dass ein Auslass des jeweiligen Einspeiserohres, über den die flüssige Phase aus dem jeweiligen Einspeiserohr ausgegeben wird, entlang der Längsachse dem jeweiligen Boden des zu versorgenden Vorverteilerkanales zugewandt ist. Die besagten Einspeiserohre sind im Bereich ihres jeweiligen Auslasses vorzugsweise je zwischen zwei parallel zueinander verlaufenden Spritzblechen angeordnet, die jeweils an einer zugeordneten Seitenwand des Vorverteilerkanals festgelegt sind. Weiterhin weisen die Vorverteilerkanäle an den nach außen gewandten Außenseiten ihrer Seitenwände zu beiden Seiten der Auslässe des jeweiligen Vorverteilerkanals je ein Leitblech auf, wobei die Leitbleche vorzugsweise senkrecht von der jeweiligen Seitenwand abstehen und jeweils mit einem unteren freien Endbereich in den unterhalb des jeweiligen Auslasses angeordneten Endverteilerkanal hinein stehen. Die Leitbleche sind dazu ausgebildet, den Strom der flüssigen Phase aus den Auslässen der Vorverteilerkanäle derart zu leiten, dass dieser jeweils möglichst vollständig im zugeordneten Endverteilerkanal landet.

Die Vorverteiler- und Endverteilerkanäle sind also in der vorstehend beschriebenen Ausführungsform vorzugsweise als nach oben hin offene Kanäle konzipiert (nach unten hin werden die Kanäle durch die besagten Böden, zu den Seiten hin durch die besagten Seitenwände sowie die stirnseitigen weiteren Seitenwände begrenzt). Die besagten Kanäle werden daher auch als Vorverteiler- bzw. Endverteilerrinnen bezeichnet.

Gemäß einer alternativen Ausführungsform sind die Endverteilerkanäle rohrförmig ausgebildet. Dabei weisen die Endverteilerkanäle jeweils eine umlaufende Wandung auf, wobei die besagten Auslässe der Endverteilerkanäle als Durchgangsöffnungen in diesen Wandungen ausgebildet sind. Vorzugsweise ist jeweils eine Mehrzahl an Auslässen entlang einer Umfangsrichtung der jeweiligen Wandung nebeneinander angeordnet. Diese nebeneinander angeordneten Durchgangsöffnungen beaufschlagen somit die gleiche Kante eines Ablaufelementes, das sich unterhalb des jeweiligen Endverteilerkanals quer zu diesem erstreckt.

Vorzugsweise ist weiterhin vorgesehen, dass die Endverteilerkanäle von einem rohrförmigen Vorverteilerkanal abgehen, der quer zu den Endverteilerkanälen entlang des besagten Kolonnenquerschnitts verläuft. Bevorzugt weist der rohrförmige Vorverteilerkanal eine umlaufende Wandung auf, wobei insbesondere die Endverteilerkanäle von einem unteren Bereich jener umlaufenden Wandung abgehen. Die Endverteilerkanäle erstrecken sich dabei bevorzugt beidseitig des Vorverteilerkanals, wobei insbesondere je zwei Endverteilerkanäle in entgegengesetzten Richtungen vom Vorverteilerkanal abgehen und miteinander fluchten, und wobei insbesondere die Endverteilerkanäle jeweils lösbar, insbesondere über eine Flanschverbindung, mit dem Vorverteilerkanal verbunden sind.

Weiterhin ist bevorzugt vorgesehen, dass der Vorverteilerkanal zum Speisen des Vorverteilerkanals mit der flüssigen Phase mit einem Zulaufrohr verbunden ist, das sich entlang des Kolonnenquerschnitts quer zum Vorverteilerkanal erstreckt, wobei insbesondere der Vorverteilerkanal von einem Endabschnitt des Zulaufrohres abgeht. Vorzugsweise weist das Zulaufrohr ebenfalls eine umlaufende Wandung auf, wobei bevorzugt der Vorverteilerkanal von einem unteren Bereich der umlaufenden Wandung am besagten Endabschnitt des Zulaufrohrs abgeht.

Der Flüssigkeitsverteiler mit rohrförmigen End- und Vorverteilerkanälen wird bevorzugt für wässrige flüssige Phasen verwendet, beispielsweise bei Kolonnen in Form von Wasserquenchkolonnen, die z.B. bei Gas-Crackern mit gasförmigen Einsätzen (z.B. Ethan) zum Kühlen bzw. Reinigen des Spaltgases verwendet werden (vgl. unten).

Der eingangs beschriebene Flüssigkeitsverteiler mit an den Rändern von Seitenwänden ausgebildeten Auslässen, der insbesondere nach oben hin offene End- und Vorverteilerkanäle bzw. -rinnen aufweist, wird hingegen vorzugsweise zum Verteilen von flüssige Kohlenwasserstoffphasen (z.B. Pyrolyseöl) in Ölwaschkolonnen verwendet (oder auch in atmosphärischen und Vakuumdestillationskolonnen), die bei Flüssig-Crackern mit schwereren, flüssigen Einsätzen (z.B. Naphtha) zum Kühlen und Reinigen (z.B. Abspalten einer schweren Fraktion von Kohlenwasserstoffen) des erzeugten Spaltgases dienen (vgl. unten).

Gemäß einer weiteren Ausführungsform der Erfindung ist vorgesehen, dass die Kolonne zumindest einen ersten (z.B. oberen) und einen zweiten (z.B. unteren) verfahrenstechnischen Abschnitt bzw. Kreislauf aufweist, wobei der zweite Abschnitt im Vergleich zum ersten Abschnitt verschmutzungsanfälliger ist als der erste Abschnitt, d.h., im zweiten Abschnitt fallen pro Zeiteinheit mehr Stoffe an, die zu einer Verschmutzung von Kolonneneinbauten (z.B. Stoffaustauschböden, Flüssigkeitsverteiler) führen als im ersten Abschnitt. Vorzugsweise ist die Kolonne dazu ausgebildet, in dem zweiten Abschnitt eine höher-siedende Komponente (z.B. höhere, ungesättigte Kohlenwasserstoffe wie z.B. Monomere) aus einer gasförmigen Phase (z.B. Spaltgas aus einem Naphtha-Cracker) abzutrennen, wobei die Kolonne bevorzugt dazu ausgebildet ist, in dem ersten Abschnitt im Vergleich dazu niedriger-siedende Kohlenwasserstoffe aus der besagten gasförmigen Phase abzutrennen. Bei der Behandlung eines Spaltgases in einer Ölwaschkolonne kann z.B. im ersten bzw. oberen Abschnitt mit einer flüssigen Phase in Form eines flüssigen, kohlenwasserstoffhaltigen Waschmittels (z.B. einem Pyrolysebenzin) gewaschen werden, wohingegen im zweiten bzw. unteren Abschnitt mit einer flüssigen Phase bzw. einem flüssigen Waschmittel gewaschen wird, das vorwiegend schwerere Kohlenwasserstoffe aufweist (z.B. Pyrolyseöl bzw. einem Gemisch aus Pyrolysebenzin und Pyrolyseöl). Die Benzinfraktion im oberen Abschnitt siedet bei dem üblicherweise vorliegenden Druck im Bereich von 1 bar bis 2,5 bar, vorzugsweise 1,5 bar, in etwa im Bereich von 140°C bis 210°C, wohingegen die im unteren Abschnitt anfallende flüssige Ölfraktion bei Temperaturen oberhalb von 250°C siedet. Im ersten Abschnitt fallen dann die leichteren Kondensate an, z.B. ölige aromatische Komponenten, die aus Kohlenwasserstoffen mit z.B. 10 oder auch weniger Kohlenstoffatomen bestehen (z.B. Naphthaline C₁₀H₈). Der Siedebereich im ersten Abschnitt wird dabei bevorzugt auf den Bereich von 105°C bis 140°C eingestellt. Im zweiten Abschnitt werden vorwiegend Kohlenwasserstoffe heraus kondensiert, die beispielsweise mehr als 10 Kohlenstoffatome aufweisen. Es handelt sich hierbei vorwiegend um Leicht- und Schweröle. Das Siedeende des Benzins liegt dabei beispielsweise bei etwa 100°C, das des Leichtöls beispielsweise bei etwa 128°C und das des Schweröls beispielsweise bei etwa 171°C. Ziel hierbei ist es insbesondere, die Temperaturniveaus so einzustellen, dass man mit den Flüssigkeiten Wärmeabnehmer versorgen kann. Generell gilt für eine Ölwaschkolonne, dass der Anteil der längerkettigen Moleküle von oben nach unten zunimmt. Feststoffpartikel wie Ruße und Teere sind hauptsächlich im unteren Abschnitt aus der Gasphase ausgeschieden und in der Flüssigphase vorhanden. Die Viskosität der Flüssigphase nimmt in der Kolonne ebenfalls von oben nach unten zu. Daher weist die Ölwaschkolonne mit Vorteil im unteren bzw. zweiten Abschnitt die erfindungsgemäßen, verschmutzungsunanfälligeren Ablaufelemente bzw. damit ausgestattete Stoffaustauschböden auf. Im oberen Abschnitt sind weniger Polymere oder längerkettige Kohlenwasserstoffe vorhanden. Daher können hier Stoffaustauschelemente bzw. eine Stoffaustauschvorrichtung mit einer höheren Wirksamkeit als die Ablaufelemente des zweiten Abschnittes eingesetzt werden. Vorzugsweise handelt es sich bei einer solchen Stoffaustauschvorrichtung um einen Siebboden, einen Ventilboden, eine Gitterpackung, eine strukturierte Packung, oder eine regellosen Füllkörperschüttung.

Für den Fall, dass die Kolonne als eine Ölwaschkolonne ausgebildet ist, die dazu eingerichtet und vorgesehen ist, ein Spaltgas abzukühlen sowie eine (insbesondere schwere) Kohlenwasserstofffraktion vom Spaltgas abzutrennen, ist der besagte Flüssigkeitsverteiler vorzugsweise dazu ausgebildet, ein Waschmittel in Form einer flüssigen Kohlenwasserstoffphase (z.B. Pyrolyseöl) auf jene erfindungsgemäßen Ablaufelemente bzw. Winkelprofile aufzugeben, um das im Gegenstrom geführte Spaltgas mit jenem Waschmittel zu beaufschlagen. Hierbei sind die End- und Vorverteilerkanäle bevorzugt als nach oben hin offene Kanäle (siehe oben) ausgebildet.

Gemäß einem weiteren Ausführungsbeispiel der Erfindung ist die Kolonne als eine Wasserquenchkolonne ausgebildet, die ein Spaltgas, das z.B. durch Spaltung eines gasförmigen Einsatzes, wie z.B. Ethan, erzeugt wurde, mit einer Wasser aufweisenden oder durch Wasser gebildeten flüssigen Phase beaufschlagt, um das Spaltgas abzukühlen und zu reinigen. Hierbei ist insbesondere der Flüssigkeitsverteiler dazu ausgebildet, jene Wasser aufweisende oder durch Wasser gebildeten flüssigen Phase auf die Ablaufelemente bzw. Winkelprofile aufzugeben, um das im Gegenstrom geführte Spaltgas mit dieser flüssigen Phase zu beaufschlagen. Vorzugsweise weist der Flüssigkeitsverteiler bei einer Kolonne in Form einer Wasserquenchkolonne die vorstehend beschriebenen rohrförmigen End- und Vorverteilerkanäle auf.

Gemäß einer weiteren Ausführungsform ist die Kolonne zur atmosphärischen Destillation eines Rohölstromes ausgebildet (d.h., die Rektifikation findet bei atmosphärischen Drücken statt). Hierbei wird bevorzugt erhitztes Rohöl durch Rektifikation in der Kolonne in eine Mehrzahl an Bestandteilen bzw. Kondensaten aufgetrennt. Das Rohöl tritt dabei vorzugsweise zweiphasig (Gas/flüssig) in die Kolonne ein. Im Sumpf der Kolonne liegt die höchste Temperatur vor, so dass die leichten Bestandteile hier nicht auskondensieren können und gasförmig weiter nach oben steigen. Im Kopf der Kolonne fällt z.B. Gas und Leichtbenzin, so genanntes Naphtha an, darunter Kerosin, Dieselkraftstoff und leichtes Heizöl. Weiter unten z.B. Gasöl (Heizöl- und Diesel-Ausgangsstoffe) und im Sumpf der atmosphärische Rückstand.

Vorzugsweise ist die Kolonne dabei in mehrere Abschnitte unterteilt, in denen das jeweilige Kondensat bzw. der jeweilige Bestandteil anfällt. Die einzelnen Abschnitte können durch Kaminböden voneinander getrennt sein, so dass die gasförmige Phase in der Kolonne von Abschnitt zu Abschnitt aufsteigen kann und die jeweiligen Kondensate abgezogen werden können

Vorzugsweise ist in dem untersten Abschnitt oder einer Mehrzahl an unteren Abschnitten, in dem bzw. in denen die schwersten Kondensate anfallen, ggf. auch in den Abschnitten darüber, jeweils zumindest einer, vorzugsweise mehrere der erfindungsgemäßen Stoffaustauschböden angeordnet, wobei die Stoffaustauschböden eines Abschnittes vorzugsweise von einem erfindungsgemäßen Flüssigkeitsverteiler (siehe oben) mit einer flüssigen Phase, insbesondere dem jeweiligen Kondensat des betreffenden Abschnittes (oder ggf. eines darüber liegenden Kolonnenabschnitts) im Gegenstrom zur gasförmigen Phase beaufschlagt werden. Es besteht auch die Möglichkeit, herkömmliche Kolonnen zur atmosphärischen Destillation mit den erfindungsgemäßen Stoffaustauschböden mit Ablaufelementen und den entsprechenden, erfindungsgemäßen Flüssigkeitsverteilern auszustatten.

Gemäß einer weiteren Ausführungsform ist die Kolonne als Kolonne zur Vakuumdestillation eines Rohölstromes bzw. eines Sumpfproduktes der atmosphärischen Destillation ausgebildet. Hierbei können, wie zuvor im Hinblick auf die atmosphärische Destillation bzw. Rektifikation beschrieben, in unterschiedlichen Abschnitten Kondensate von dem besagten Sumpfprodukt abgetrennt werden, wobei nun jedoch ein Vakuum in der Kolonne bzw. deren einzelnen Abschnitten herrscht. Der Kolonnendruck kann hierbei in einem Bereich von 10 mbar bis 30 mbar liegen.

Weitere Einzelheiten und Vorteile der Erfindung sollen durch die nachfolgenden Figurenbeschreibungen von Ausführungsbeispielen anhand der Figuren erläutert werden.

Es zeigen:
- Fig. 1: eine Schnittansicht einer Ölwaschkolonne mit erfindungsgemäßen Stoffaustauschböden;
- Fig. 2: ein Detail der Figur 1;
- Fig. 3: das Detail III gemäß Figur 2;
- Fig. 4: eine Draufsicht auf das Detail gemäß Figur 3;
- Fig. 5: eine teilweise geschnittene Ansicht entlang der Linie V-V der Figur 4;
- Fig. 6: eine Detailansicht eines Festlagers eines erfindungsgemäßen Ablaufelementes;
- Fig. 7: eine ausschnitthafte Schnittansicht des Details VII gemäß Figur 2;
- Fig. 8: eine Draufsicht auf einen erfindungsgemäßen Stoffaustauschboden (unterer Teil) sowie auf einen Flüssigkeitsverteiler (oberer Teil) zum Beaufschlagen des Stoffaustauschbodens mit einer flüssigen Phase;
- Fig. 9: eine ausschnitthafte Ansicht entlang der Richtung IX der Figur 8 auf einen Ausgleichskanal des Flüssigkeitsverteilers, der zwei Vorverteilerkanäle des Flüssigkeitsverteilers miteinander verbindet;
- Fig. 10: eine ausschnitthafte Ansicht entlang der Richtung X der Figur 8 auf einen Endverteilerkanal mit Auslässen in Form von rechteckförmigen Ausnehmungen, die entlang eines Randes einer Seitenwand des Endverteilerkanals ausgebildet sind;
- Fig. 11: eine ausschnitthafte Ansicht entlang der Richtung XI der Figur 8 auf einen Vorverteilerkanal mit Auslässen in Form von rechteckförmigen Ausnehmungen, die entlang eines Randes einer Seitenwand des Vorverteilerkanals ausgebildet sind;
- Fig. 12: eine ausschnitthafte, teilweise geschnittene Ansicht eines Einspeiserohres für einen Vorverteilerkanal eines Flüssigkeitsverteilers gemäß Figuren 8 bis 11;
- Fig. 13: eine weitere ausschnitthafte, teilweise geschnittene Ansicht eines Einspeiserohres für einen Vorverteilerkanal eines Flüssigkeitsverteilers gemäß Figuren 8 bis 12;
- Fig. 14 - 15: eine Schnittansicht einer Kolonne in Form einer Wasserquenchkolonne mit erfindungsgemäßen Stoffaustauschböden;
- Fig. 16: eine Draufsicht auf eine weitere Ausführungsform eines Flüssigkeitsverteilers für die Kolonne gemäß Figuren 14 und 15;
- Fig. 17: eine Schnittansicht des Flüssigkeitsverteilers gemäß Figur 16;
- Fig. 18: eine Schnittansicht eines Endverteilerkanals eines Flüssigkeitsverteilers gemäß Figuren 16 und 17;
- Fig. 19: eine Schnittansicht eines weiteren Endverteilerkanals;
- Fig. 20 - 21: ausschnitthafte Ansichten entlang der Richtung XX der Figur 17; und
- Fig. 22: eine schematische Schnittansicht einer Kolonne zur atmosphärischen sowie einer Kolonne zur Vakuumdestillation eines Rohölstromes.

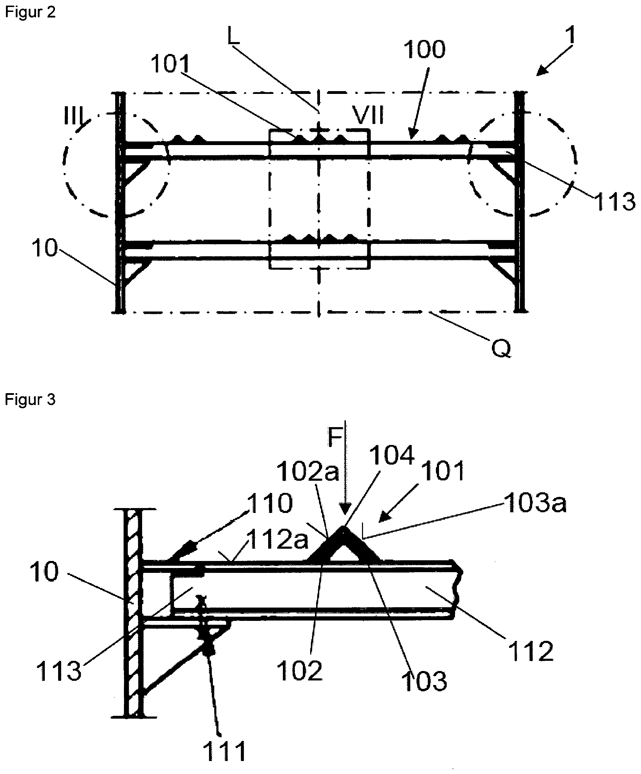

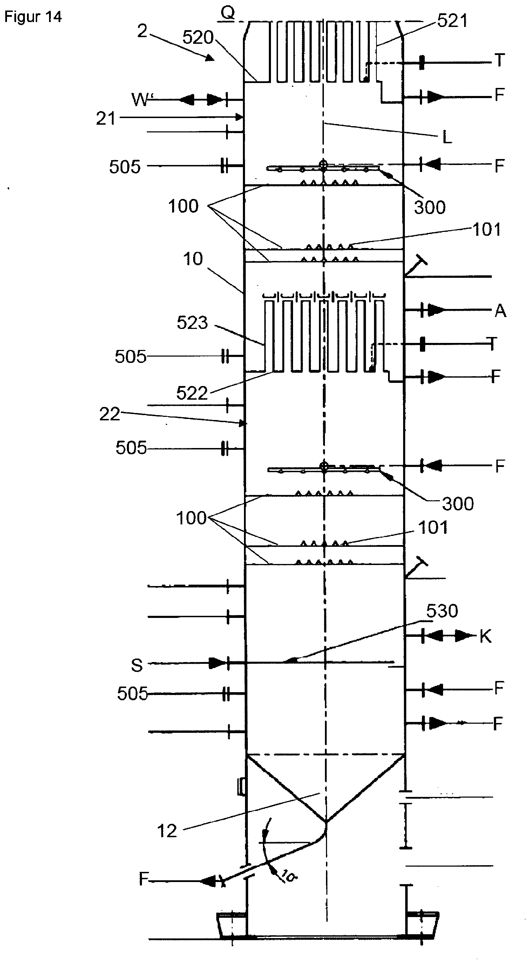

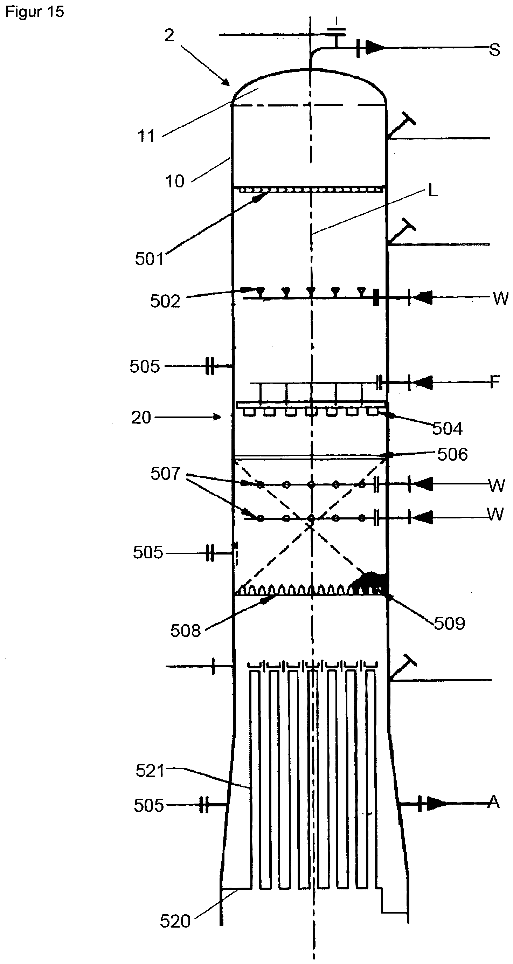

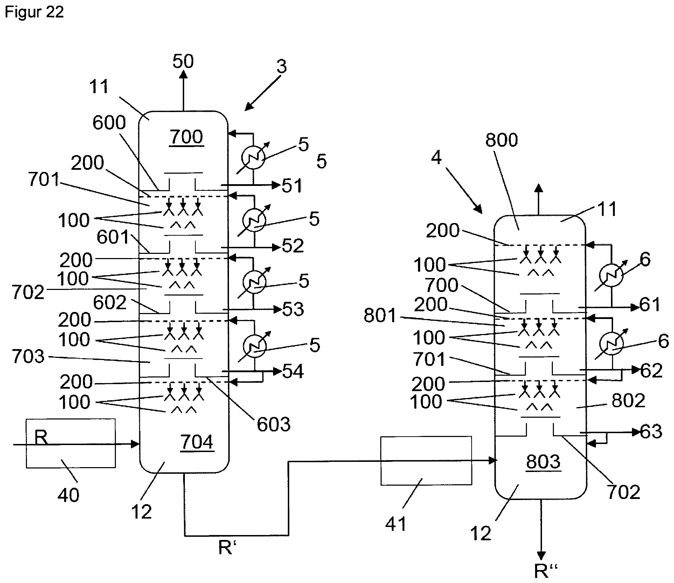

Die Figuren 2 bis 8 zeigen einen erfindungsgemäßen Stoffaustauschboden 100, der z.B. in einer Ölwaschkolonne 1 gemäß Figur 1 zum Abkühlen und Reinigen eines Spaltgases S, in einer Wasserquenchkolonne 2 gemäß Figuren 14 und 15 zum Abkühlen und Waschen eines Spaltgases S, in einer Kolonne 3 zur atmosphärischen Destillation oder in einer Kolonne 4 zur Vakuumdestillation eines Rohölstromes R gemäß Figur 22 zum Einsatz kommen kann. Allgemein kann der erfindungsgemäße Stoffaustauschboden 100 überall dort in Kolonnen mit Vorteil eingesetzt werden, wo aufgrund der in Stoffaustausch zu bringenden gasförmigen bzw. flüssigen Phasen ein hohes Verschmutzungsrisiko herrscht.

Die besagten Kolonnen 1-4 weisen einen umlaufenden Mantel 10 auf, der sich entlang einer Längsachse L erstreckt und einen Innenraum der jeweiligen Kolonne 1-4 umschließt, in dem sich der jeweilige Stoffaustauschboden 100 im Wesentlichen über den gesamten, senkrecht zur Längsachse L orientierten Kolonnenquerschnitt Q erstreckt.

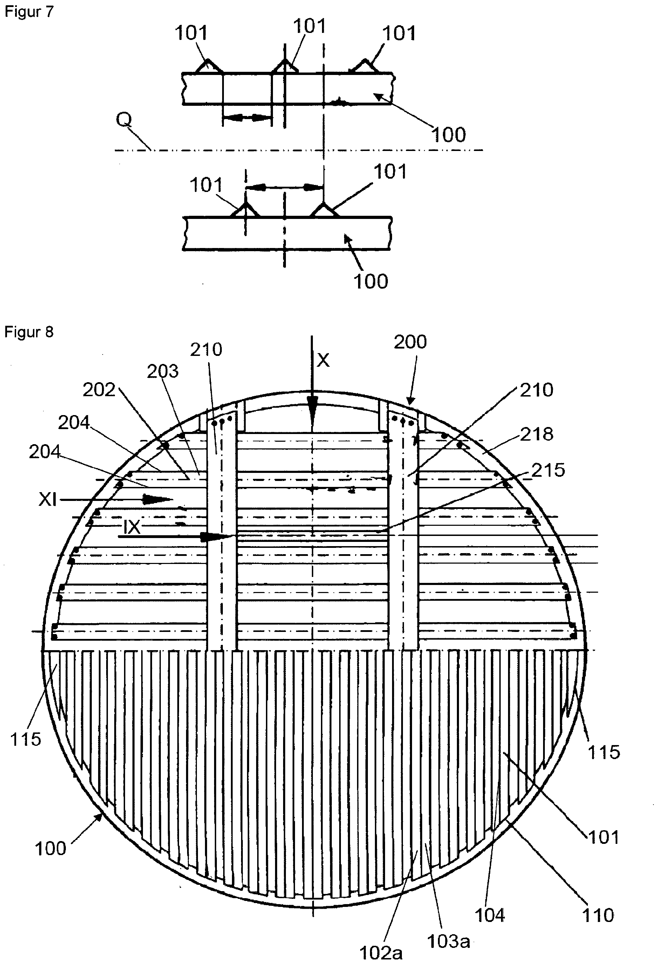

Der Stoffaustauschboden 100 weist gemäß Figur 8 eine Mehrzahl an längs erstreckten, parallel zueinander orientierten Ablaufelementen 101 auf, die sich parallel zum besagten Kolonnenquerschnitt Q auf gleicher Höhe (bezogen auf die Längsachse L des Mantels 10) erstrecken. Benachbarte Ablaufelemente 101 sind dabei quer zu ihrer Längserstreckungsrichtung äquidistant zueinander beabstandet, so dass zwischen je zwei Ablaufelementen 101 eine Durchgangsöffnung oder Lücke gebildet wird, durch die eine gasförmige Phase im Innenraum der Kolonne 1-4 aufsteigen kann.

Die Ablaufelemente 101 weisen gemäß den Figuren 3 bis 5, 6 und 8 jeweils einen ersten und einen zweiten Schenkel 102, 103 auf, die winklig miteinander unter Ausbildung einer Kante 104 verbunden sind, so dass die Ablaufelemente 101 gleichschenklige Winkelprofile 101 bilden. Dabei sind die jeweiligen Kanten 104 der Ablaufelemente 101 ebenfalls längs erstreckt ausgebildet und verlaufen parallel zum Kolonnenquerschnitt Q. Weiterhin laufen die Schenkel 102, 103 der Ablaufelemente 101 entlang der Längsachse L nach oben hin aufeinander zu, so dass die beiden Schenkel 102, 103 eines Ablaufelementes 101 je eine nach oben gewandte Ablauffläche 102a, 103a definieren, die jeweils ausgehend von der Kante 104 des jeweiligen Ablaufelementes 101 nach unten hin abfallen. Wird entsprechend eine flüssige Phase F durch einen Flüssigkeitsverteiler auf die jeweilige Kante 104 eines Ablaufelementes 101 aufgegeben, fließt diese zu beiden Seiten der jeweiligen Kante 104 über die Ablaufflächen 102a, 103a nach unten ab, so dass je zwei Vorhänge der flüssigen Phase F gebildet werden.

Gemäß Figur 7 sind bevorzugt mehrere erfindungsgemäße Stoffaustauschböden 100 entlang der Längsachse L übereinander angeordnet, wobei die Ablaufelemente 101 benachbarter Stoffaustauschböden 100 entlang des Kolonnenquerschnitts Q versetzt zueinander angeordnet sind, so dass die von den Ablaufflächen 102a, 103a des jeweiligen Ablaufelementes 101 eines Stoffaustauschbodens 100 ablaufende flüssige Phase F auf zwei unterhalb jenes Ablaufelementes 101 angeordnete Ablaufelemente 101 eines darunter liegenden Stoffaustauschbodens 100 aufgeben wird. Dabei sind die Ablaufelemente 101 des jeweils unteren Stoffaustauschbodens 100 entlang des Kolonnenquerschnitts Q bevorzugt jeweils mittig zwischen zwei Ablaufelementen 101 des darüber befindlichen Stoffaustauschbodens 100 angeordnet. Die erfindungsgemäßen Stoffaustauschböden 100 werden daher auch Kaskadenböden genannt.

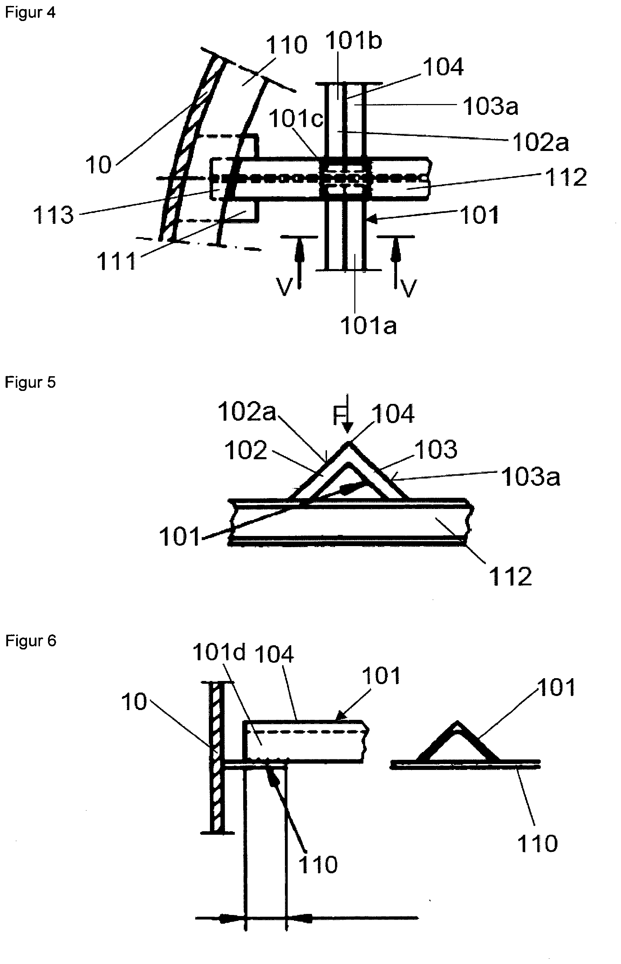

Gemäß den Figuren 3 - 6 liegen die Ablaufelemente 101 eines Stoffaustauschbodens 100 mit einander gegenüberliegenden Endbereichen 101d (vgl. Fig. 6) auf einem zugeordneten, umlaufenden Tragring 110 auf, der an einer Innenseite des Mantels 10 der jeweiligen Kolonne 1-4 festgelegt ist. Dabei ist jeweils ein Endbereich 101d über ein Festlager, der andere über ein Gleitlager auf dem Tragring 110 gelagert.

Die Ablaufelemente 101 können sich durchgehend über den Kolonnenquerschnitt Q von einem Innenseitenbereich des Mantels 10 der Kolonne zu einem gegenüberliegenden Innenseitenbereich des Mantels 10 der Kolonne erstrecken. Es besteht aber auch die Möglichkeit, dass ein Ablaufelement 101 aus mehreren Segmenten 101a, 101b besteht (vgl. Fig. 4), die entlang der Längserstreckungsrichtung des Ablaufelementes 101 hintereinander angeordnet sind. Dabei können Spalte zwischen zwei benachbarten Segmenten 101a, 101b mit einer Kappe 101c überdeckt sein. Derartige Segmente 101a, 101b liegen dann mit ihren freien Endbereichen auf dem Tragring 110 und/oder auf einem Träger 112, insbesondere Profilträger 112, auf, der sich quer zu den Ablaufelementen 101 erstreckt. Ggf. können mehrere derartige Träger 112 vorgesehen werden, die dann parallel zu einander verlaufen. Ein Endbereich eines Segmentes 101a, 101b ist dann über ein Festlager auf dem Tragring 110 oder einem Träger 112 gelagert, der jeweils andere Endbereich über ein Gleitlager.

Die Träger 112, sofern vorhanden, untergreifen den Tragring 110 mit je einem freien Endbereich 113, der auf einem unterhalb des jeweiligen Tragrings110 an der Innenseite des Mantels 10 festgelegten Lager 111 aufliegt. Die Endbereiche 113 des jeweiligen Trägers 112 weisen dabei eine Ausnehmung zur Aufnahme des zugeordneten Tragrings 110 auf, so dass der jeweilige Tragring 110 zusammen mit dem jeweiligen Träger 112 eine im Wesentliche stufenlose Oberfläche 112a ausbildet, auf der die Ablaufelemente 101 aufliegen können (vgl. Fig. 3). Bei den Trägern 112 ist jeweils ebenfalls bevorzugt ein Endbereich 113 über ein Lager 111 in Form eines Gleitlagers 111 (vgl. Fig. 3) am Mantel 10 gelagert, wohingegen der andere Endbereich 113 über ein Festlager gelagert wird (vgl. Fig. 2).

Weiterhin kann der Stoffaustauschboden 100 gemäß Figur 8 jeweils seitlich eines äußersten Ablaufelementes 101 ein Abdeckelement 115 aufweisen, das dazu dient, die Durchgangsöffnung zwischen dem besagten Ablaufelement 101 und dem Abdeckelement 115 auf die vorgesehene Breite zu begrenzen.

Zum Beaufschlagen mehrerer übereinander angeordneter Stoffaustauschböden 100 mit einer flüssigen Phase F ist gemäß den Figuren 8-13 eine erste Ausführungsform eines Flüssigkeitsverteilers 200 vorgesehen. Dieser weist mehrere nach oben hin offene, im Querschnitt kastenförmige Endverteilerkanäle 202 auf, die entlang der Längsachse L der jeweiligen Kolonne 1 - 4 oberhalb der Stoffaustauschböden 100 angeordnet sind und sich jeweils entlang des besagten Kolonnenquerschnitts Q sowie quer zu den Ablaufelementen 101 erstrecken.

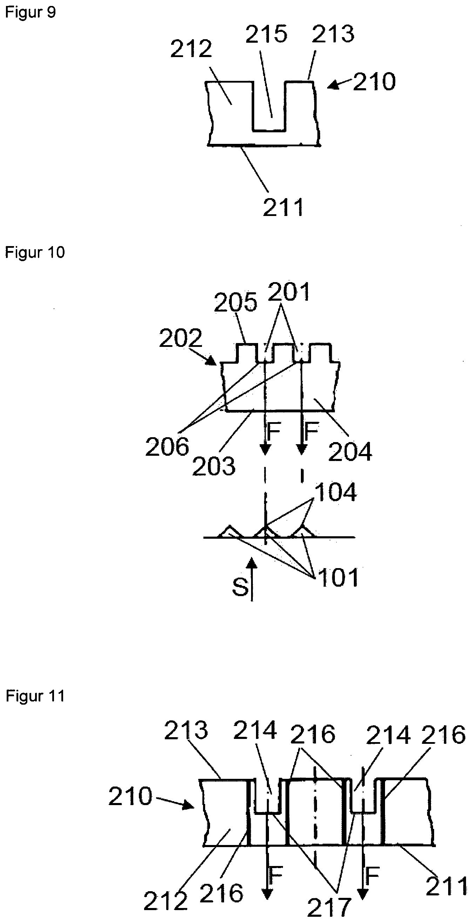

Die längs erstreckten Endverteilerkanäle 202 weisen jeweils einen parallel zum Kolonnenquerschnitt Q erstreckten Boden 203 auf sowie zwei davon abgehende Seitenwände 204, wobei die besagten Seitenwände 204 jeweils einen oberen Rand 205 aufweisen (vgl. Fig. 10), an dem entlang Auslässe 201 in Form von rechteckförmigen Ausnehmungen ausgebildet sind, die entlang der Längsachse L der jeweiligen Kolonne 1, 3, 4 jeweils lotrecht oberhalb einer Kante 104 eines dem jeweiligen Auslass 201 zugeordneten Ablaufelementes 101 angeordnet sind. Die Endverteilerkanäle 202 werden zum Verteilen der flüssigen Phase F auf die Ablaufelemente 101 nun so mit der flüssigen Phase F beschickt, das diese über die parallel zum jeweiligen Boden 203 verlaufenden Unterkanten 206 der einzelnen Auslässe 201 tritt und auf die besagten Kanten 104 herabfällt und durch die kaskadierten Ablaufelemente 101 (vgl. Fig. 7) weiter nach unten verteilt wird, so dass sich eine Vielzahl an Vorhängen der flüssigen Phase F bilden, durch die eine zu behandelnde gasförmige Phase (z.B. Spaltgas) S im Gegenstrom zwangsgeführt wird, so dass sich ein intensiver Stoff- und/oder Energieaustausch zwischen den Phasen F, S ereignet.

Zum Beschicken der Endverteilerkanäle 202 mit der flüssigen Phase F sind gemäß Figur 9 zwei zueinander parallele, entlang der Längsachse L oberhalb der Endverteilerkanäle 202 angeordnete Vorverteilerkanäle 210 vorgesehen, die ebenfalls nach oben hin offen ausgebildet sind und im Querschnitt kastenförmig ausgeformt sind. Die Vorverteilerkanäle 210 erstrecken sich ebenfalls entlang des Kolonnenquerschnitts Q, und zwar vorzugsweise ebenso wie die Endverteilerkanäle 202 im Wesentlichen über den gesamten Kolonnenquerschnitt, d.h., von einem Innenseitenbereich des Mantels 10 der jeweiligen Kolonne 1, 3, 4 hin zu einem gegenüberliegenden Innenseitenbereich des Mantels 10. Des Weiteren erstrecken sich die Vorverteilerkanäle 210 quer zu den Endverteilerkanälen 202.

Die Vorverteilerkanäle 210 weisen ebenfalls jeweils einen parallel zum Kolonnenquerschnitt Q erstreckten Boden 211 auf sowie zwei davon abgehende Seitenwände 212, die jeweils einen oberen Rand 213 aufweisen, an denen Auslässe 214 in Form von rechteckförmigen Ausnehmungen ausgebildet sind, über die die flüssige Phase F in jeweils einen zugeordneten Endverteilerkanal 202 einleitbar ist. Hierzu sind die Auslässe 214 der Vorverteilerkanäle 210 wiederum jeweils lotrecht entlang der Längsachse L des Mantels 10 der jeweiligen Kolonne 1, 3, 4 oberhalb eines zugeordneten Endverteilerkanals 202 angeordnet (vgl. Figuren 11, 12 und 13).

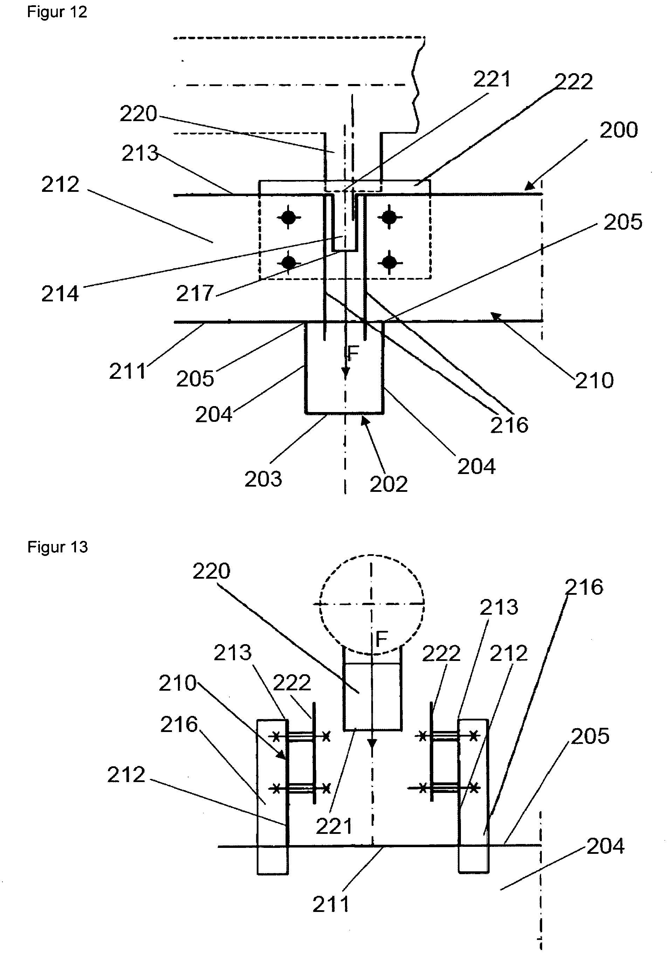

Die besagten Vorverteilerkanäle 210 werden gemäß Figuren 12 und 13 ihrerseits über zumindest je ein Einspeiserohr 220, vorzugsweise über je zwei Einspeiserohre 220 mit der flüssigen Phase F beschickt, die sich zumindest abschnittsweise entlang der Längsachse L des Mantels 10 der jeweiligen Kolonne 1, 3, 4 erstrecken, wobei ein Auslass 221 des jeweiligen Einspeiserohres 220, über den die flüssige Phase F aus dem jeweiligen Einspeiserohr 220 in den zugeordneten Vorverteilerkanal 210 strömt, entlang der besagten Längsachse L dem jeweiligen Boden 211 des zu versorgenden Vorverteilerkanales 210 zugewandt ist. Die besagten Einspeiserohre 220 sind je zwischen zwei parallel zueinander verlaufenden Spritzblechen 222 angeordnet, die den Auslass 221 des jeweiligen Einspeiserohres 220 beidseitig flankieren und jeweils an einer zugeordneten Seitenwand 212 des betreffenden Vorverteilerkanals 210 festgelegt sind.

Weiterhin weisen die Vorverteilerkanäle 210 an den nach außen gewandten Außenseiten ihrer Seitenwände 212 zu beiden Seiten der Auslässe 214 des jeweiligen Vorverteilerkanals 210 je ein Leitblech 216 auf, die senkrecht von der jeweiligen Seitenwand 212 abstehen und jeweils mit einem unteren freien Endbereich in den unterhalb des jeweiligen Auslasses 214 angeordneten Endverteilerkanal 202 hinein ragen. Die Leitbleche 216 dienen dazu, den Strom der flüssigen Phase F aus den Auslässen 214 der Vorverteilerkanäle 210 in die zugeordneten Endverteilerkanäle 202 zu leiten.

Damit die flüssige Phase F in den beiden Vorverteilerkanälen 210 immer den gleichen Pegel aufweist, können die beiden Vorverteilerkanäle 210 gemäß Figuren 8 und 9 über zumindest einen Ausgleichskanal 215 verbunden sein, der sich zwischen den beiden Vorverteilerkanälen 210 erstreckt, und zwar quer zu diesen.

Der vorstehend beschriebene Flüssigkeitsverteiler 200 wird bevorzugt bei eher viskoseren flüssigen Phasen F verwendet. Insbesondere bei eher wässrigen Phasen F wird bevorzugt die nachfolgend beschriebene zweite Ausführungsform des erfindungsgemäßen Flüssigkeitsverteilers 300 verwendet.

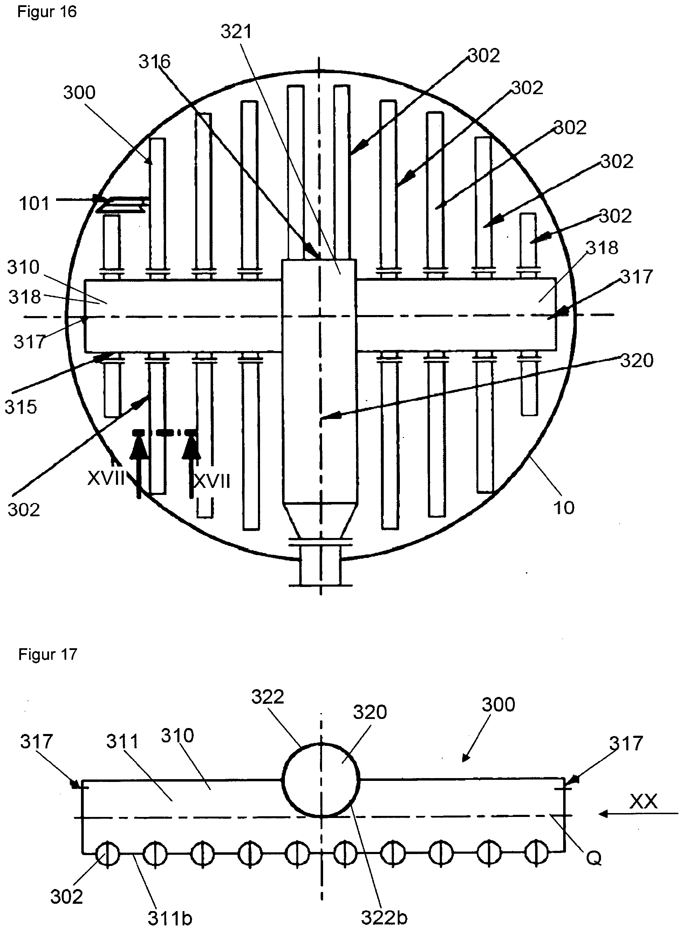

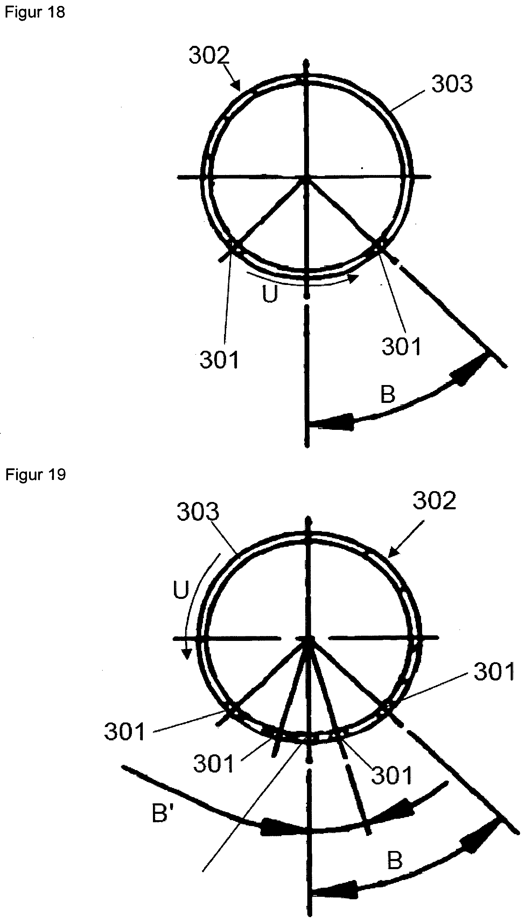

Dieser weist gemäß den Figuren 16 bis 21 rohrförmige Endverteilerkanäle 302 mit einer umlaufende Wandung 303 auf, in der jeweils zum Verteilen der flüssigen Phase F Auslässe 301 in Form von Durchgangsöffnungen 301 ausgebildet sind, wobei jeweils entlang einer Umfangsrichtung U des jeweiligen Endverteilerkanals 302 bzw. der jeweiligen Wandung 303 mehrere solche Durchgangsöffnungen 301 nebeneinander angeordnet sind. Gemäß Figur 18 können z.B. zwei derartige Durchgangsöffnungen 301 entlang der Umfangsrichtung U nebeneinander angeordnet sein, z.B. so, dass die beiden Öffnungen 301 jeweils unter einem Winkel von B=15° bis B=50° (z.B. B=27°) zur Vertikalen nach unten weisen. Die besagten Winkel richten sich nach dem gewünschten Auftreffpunkt der Strahlen auf den Ablaufelementen 101 und können in bekannter Weise berechnet werden (Wurfparabel schräger Wurf). Gemäß Figur 19 können z.B. vier derartige Durchgangsöffnungen 301 entlang der Umfangsrichtung U nebeneinander an der Wandung 303 ausgebildet sein, wobei die beiden äußersten Durchgangsöffnungen 301 z.B. jeweils unter einem Winkel von B=36° zur Vertikalen nach unten weisen können und die beiden inneren Durchgangsöffnungen 301 z.B. unter einem Winkel von jeweils B'=12,5°.

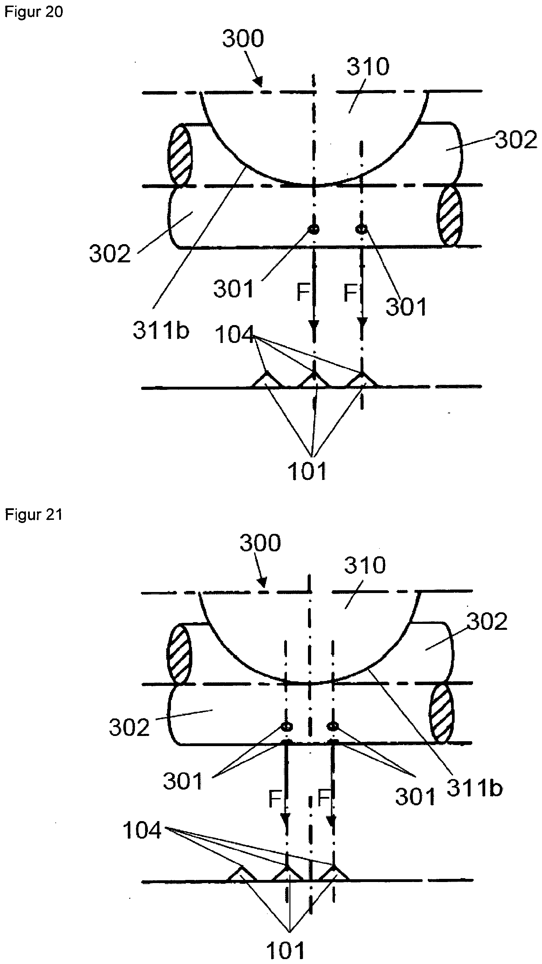

Die rohrförmigen Endverteilerkanäle 302 verlaufen gemäß Fig. 16 jeweils oberhalb der Ablaufelemente 101 der zu beaufschlagenden Stoffaustauschböden 100 parallel zum Kolonnenquerschnitt Q sowie quer zu den Ablaufelementen 101, wobei die vorstehend beschriebenen Auslässe 301 bzw. Durchgangsöffnungen 301, die jeweils entlang der besagten Umfangsrichtung U eines Endverteilerkanals 302 hintereinander in der entsprechenden Wandung 303 ausgebildet sind, jeweils wiederum lotrecht entlang der Längsachse L oberhalb einer Kante 104 eines zugeordneten Ablaufelementes 101 angeordnet sind, um diese mit der flüssigen Phase F zu beaufschlagen (vgl. Fig. 20 und 21)

Gemäß den Figuren 16 und 17 ist weiterhin vorgesehen, dass die Endverteilerkanäle 302 jeweils von einem rohrförmigen Vorverteilerkanal 310 abgehen, der quer zu den Endverteilerkanälen 302 sowie parallel zum Kolonnenquerschnitt Q verläuft, wobei der Vorverteilerkanal 310 eine umlaufende Wandung 311 mit einem entlang der Längsachse L des Mantels 10 nach unten gewandten unteren Bereich 311b aufweist (vgl. auch Fig. 20 und 21), von dem je zwei Endverteilerkanäle 302 in entgegen gesetzten Richtungen abgehen und miteinander fluchten. Bevorzugt sind die besagten rohrförmigen Endverteilerkanäle 302 jeweils lösbar, und zwar vorzugsweise über eine Flanschverbindung 315, mit dem Vorverteilerkanal 310 verbunden, so dass Sie z.B. zu Montage- und Wartungszwecken vom Vorverteilerkanal 310 zerstörungsfrei abnehmbar sind.

Der besagte Vorverteilerkanal 310 ist weiterhin zum Beschicken des Vorverteilerkanals 310 mit der zu verteilenden flüssigen Phase F mit einem Zulaufrohr 320 verbunden, das sich parallel zum Kolonnenquerschnitt Q sowie quer und mittig zum Vorverteilerkanal 310 erstreckt. Dabei geht der Vorverteilerkanal 310 von einem Endabschnitt 321 des Zulaufrohres 320 ab, und zwar von einem entlang der besagten Längsachse L nach unten gewandten unteren Bereich 322b einer umlaufenden Wandung 322 des Zulaufrohres 320 (vgl. Fig. 17).

Zum Entlüften des Zulaufrohres 320 ist an dessen Endabschnitt 321 an einem höchsten Punkt eine Entlüftungsöffnung 316 vorgesehen. Weiterhin weist auch der Vorverteilerkanal 310 je eine Entlüftungsöffnung 317 an einem höchsten Punkt seiner beiden einander gegenüberliegenden Endabschnitte 318 auf.

Figur 1 zeigt eine erfindungsgemäße Kolonne 1 in Form einer Ölwaschkolonne in der der vorstehend beschriebene Stoffaustauschboden 100 sowie der Flüssigkeitsverteiler 200 nach Art der Figuren 8 bis 13 zum Einsatz kommen, wobei jene Kolonne 1 z.B. bei einem Flüssig-Cracker zum Cracken von Naphtha zur Herstellung von Olefinen als eine erste Kolonne nach dem Steamcracker vorgesehen ist, um das darin erzeugte Spaltgas S zu kühlen und zu reinigen.

Die Kolonne 1 weist einen im Wesentlichen zylindrischen Mantel 10 auf, der sich entlang einer mit der Vertikalen zusammenfallenden Längsachse L erstreckt und einen Innenraum der Kolonne 1 definiert, der in drei verfahrenstechnische Abschnitte 20, 21, 22 unterteilt ist, nämlich einen oberen ersten Abschnitt 20, einen darunter befindlichen mittleren zweiten Abschnitt 21 sowie einen darunter vorgesehenen unteren dritten Abschnitt 22. Das vorgekühlte Spaltgas S wird mit einer Temperatur zwischen z.B. ca. 400°C und 600°C der Ölwaschkolonne 1 im Bodenbereich des unteren dritten Abschnitts 22 über einen Gasverteiler 420 zugeführt. Der dritte Abschnitt 22 der Ölwaschkolonne 1 weist dabei mehrere entlang der Längsachse L übereinander angeordnete Stoffaustauschböden 100 auf, wobei - wie vorstehend beschrieben - jeweils benachbarte Stoffaustauschböden 100 so ausgebildet sind, dass die Ablaufelemente 101 des jeweils unteren Stoffaustauschbodens 100 mittig unter den Durchgangsöffnungen bzw. Lücken des darüber angeordneten Stoffaustauschbodens 100 angeordnet sind.

Das Spaltgas S durchströmt den gesamten Innenraum der Kolonne 1 von unten nach oben entlang der Längsachse L des Mantels 10 der Kolonne 1, wobei im unteren dritten Abschnitt 22 eine kohlenwasserstoffhaltige flüssig Phase F', nämlich ein Schweröl F', als Waschmittel F' mittels des Flüssigkeitsverteilers 200, der entlang der Längsachse L oberhalb der Stoffaustauschböden 100 angeordnet ist, auf die Stoffaustauschböden 100 wie oben beschrieben aufgegeben wird. Das Waschmittel F' strömt entsprechend im dritten Abschnitt 22 herab und wird durch die Stoffaustauschböden 100 in intensiven Kontakt mit der aufsteigenden Gasphase S gebracht. Dadurch wird aus dieser Spaltgasphase S der Anteil an den schwersten Kohlenwasserstoffen abgetrennt, die sich als Schweröl F' im Sumpf 12 der Kolonne 1 sammeln. Das Schweröl F' wird von dort abgezogen, gekühlt und als Waschmittel F' zumindest teilweise in den dritten Abschnitt 22 der Kolonne 1 über den dortigen Flüssigkeitsverteiler 200 zurückgeführt und erneut auf die Gasphase S gegeben.

Aus dem untersten dritten Abschnitt 22 gelangt die Gasphase S über überdachte Kamine 411 eines Kaminbodens 410 in den mittleren zweiten Abschnitt 21 der Kolonne 1. Hier steigt die Gasphase S ebenfalls durch Stoffaustauschböden 100 weiter nach oben auf, die im Gegenstrom über einen weiteren Flüssigkeitsverteiler 200 des zweiten Abschnitts 21 mit eine flüssigen Phase F in Form eines flüssigen, kohlenwasserstoffhaltigen Waschmittels F beaufschlagt werden, so dass sich entsprechende, aus der Gasphase S abgetrennte Komponenten als Leichtöl F auf dem Kaminboden 410 sammeln. Von dort aus kann Leichtöl F über Abläufe 412 direkt in die Vorverteilerkanäle 210 des Flüssigkeitsverteilers 200 des dritten Abschnitts 22 gelangen. Weiterhin wird das besagte Leichtöl F von dem besagten Kaminboden 410 aus dem zweiten Abschnitt 21 der Kolonne 1 abgezogen, mit einer Benzinfraktion vermischt und als besagtes Waschmittel F über den besagten weiteren Flüssigkeitsverteiler 200 in den zweiten Abschnitt 21 zurückgeführt.

Aus dem zweiten Abschnitt 21 gelangt das Spaltgas S über den Ventilboden 403 schließlich in den oberen ersten Abschnitt 20 der Kolonne 1, wo es über Ventilböden 401, 400 in den Kopf 11 der Kolonne 1 gelangt und von dort abgezogen wird. Im ersten Abschnitt 20 wird die Gasphase S mit einem flüssigen, kohlenwasserstoffhaltigen Waschmittel F" beaufschlagt, das z.B. eine Benzinfraktion darstellt, die aus einem Dekanter einer Wasser-Benzin-Trennung einer nachgeschalteten Wasserwäsche stammt, wobei das Waschmittel F" auf den obersten Ventilboden 400 des obersten Abschnitts 20 aufgegeben wird. Mittels des Waschmittels F" wird im oberen ersten Abschnitt 20 eine Benzinfraktion aus dem Spaltgas S abgetrennt, die über den Ablauf 404 in den Flüssigkeitsverteiler 200 des zweiten Abschnitts 22 der Kolonne 1 gelangen kann bzw. dem Waschmittel F zugeben werden kann. Falls Wasser F'" als zweite Flüssigkeit anfällt, kann dieses aus dem ersten Abschnitt 20 über einen gesonderten Stutzen abgezogen werden.

Zu Wartungszwecken weist die Kolonne 1 des Weiteren eine Mehrzahl an Mannlöchern 405 auf, über die insbesondere die Flüssigkeitsverteiler 200 zugänglich sind.

Figuren 14 und 15 zeigen eine weitere erfindungsgemäße Kolonne 2 in Form einer Wasserquenchkolonne 2, bei der es sich insbesondere um eine erste Kolonne stromab eines Steamcrackers handelt, die zum Abkühlen und Reinigen eines Spaltgases S dient, das beim Gas-Cracker durch Dampfspaltung eines gasförmigen leichten Einsatzes, wie z.B. Ethan, erzeugt wurde.

Das Spaltgas S wird dabei gemäß Figur 14 über ein Gasverteilerrohr 530 in einen unteren, dritten Abschnitt 22 der Kolonne 2 eingeleitet, wo es durch mehrere übereinander angeordnete Stoffaustauschböden 100 aufsteigt und dabei mittels eines Flüssigkeitsverteilers 300 nach Art der Figuren 16 bis 21 mit einer flüssigen Phase F in Form von Wasser beaufschlagt wird. Die flüssige Phase F wird aus dem Sumpf 12 der Kolonne 2 abgezogen und ggf. nach einer Filterung erneut über den Flüssigkeitsverteiler 300 auf die Stoffaustauschböden 100 des dritten Abschnittes 22 aufgegeben. Die Ablaufelemente 101 dieser Stoffaustauschböden 100 sind wie vorstehend beschrieben versetzt zueinander angeordnet.

Aus dem dritten Abschnitt 22 gelangt die Gasphase S über überdachte Kamine 523 eines Kaminbodens 522 in einen oberhalb des dritten Abschnitts 22 vorgesehenen zweiten Abschnitt 21 der Kolonne 2, in dem die Gasphase S wie zuvor im dritten Abschnitt 22 durch mehrere der besagten Stoffaustauschböden 100 geführt wird, die mit einer flüssigen Phase F in Form von Wasser über einen weiteren Flüssigkeitsverteiler 300 beaufschlagt werden. Von dem besagten Kaminboden 522 wird die flüssige Phase F abgezogen und nach Filterung über den besagten Flüssigkeitsverteiler 300 des zweiten Abschnittes 22 in den zweiten Abschnitt 22 zurückgeführt.

Aus dem zweiten Abschnitt 22 gelangt die Gasphase S wiederum über überdachte Kamine 521 eines Kaminbodens 520 in den oberen ersten Abschnitt 20 der Kolonne 2, wobei oberhalb des Kaminbodens 520 eine regellose Schüttung 509 vorgesehen ist, die auf einer Trägerplatte 508 ruht und nach oben hin durch eine Bettbegrenzung 506 begrenzt wird. Die Schüttung 509 wird über einen Flüssigkeitsverteiler 504 mit einer flüssigen Phase F in Form von Wasser beaufschlagt, die sich auf dem Kaminboden 520 sammelt, von dort abgezogen wird und zum Flüssigkeitsverteiler 504 zurückgeführt wird. Die Schüttung 509 ist weiterhin mittels eines Waschöls W über Düsen 507 beaufschlagbar, um diese ggf. zu reinigen. Die aufsteigende Gasphase S gelangt über einen Abscheider 501 in den Kopf 11 der Kolonne 2 und wird dort abgezogen. Weiterhin kann oberhalb des besagten Flüssigkeitsverteilers 504 über Düsen 502 ein Waschöl W auf den Abscheider 501 gegeben werden, um diesen ggf. zu reinigen.

Zu Wartungszwecken weist die Wasserquenchkolonne 2 mehrere Mannlöcher 505 auf, über die Einbauten der Kolonne 2, wie z.B. die Flüssigkeitsverteiler 300, 504, zugänglich sind.

Weiterhin können die Kaminböden 520, 522 über entsprechende Stutzen T, A abgeschöpft bzw. von Teer und anderen Verschmutzungsprodukten befreit werden.

Figur 22 zeigt schließlich weitere Ausführungsformen erfindungsgemäßer Kolonnen 3, 4, wobei es sich um eine Kolonne 3 zur atmosphärischen Destillation eines Rohölstromes R handelt sowie um eine Kolonne 4 zur Vakuumdestillation, die den atmosphärischen Rest destilliert.

Hierbei wird ein Rohölstrom R in einer Heizeinrichtung 40 erhitzt und in einen unteren Abschnitt 704 der Kolonne 3 zur atmosphärischen Destillation als zweiphasiges Gemisch eingespeist (bei atmosphärischen Kolonnendrücken). Über Kaminböden 603, 602, 601, 600 gelangt die gasförmige Phase in den Kopf 11 der Kolonne 3, wo sie abgezogen wird 50 (z.B. enthaltend Ethan, Propan und/oder Butan). In den einzelnen Abschnitten 703, 702, 701, 700 über den jeweils zugeordneten Böden 603, 602, 601, 600 kondensieren die einzelnen Fraktionen des Rohöls R aus und werden als leichte Destillate (z.B. Benzin) 51 oder Mitteldestillate 52, 53, 54 (z.B. Dieselkraftstoffe, Heizöle) aus den entsprechenden Abschnitten 703, 702, 701, 700 der Kolonne 3 abgezogen. Das jeweilige Kondensat 54, 53, 52, 51 wird dabei über einen Wärmetauscher 5 abgekühlt und teilweise in einen oberen Bereich des jeweiligen Abschnittes 703, 702, 701, 700 zurückgeführt und dort mittels eines Flüssigkeitsverteilers 200 nach Art der Figuren 8 bis 13 auf die erfindungsgemäßen Stoffaustauschböden 100 aufgegeben, die wie vorstehend beschrieben übereinander angeordnet sein können und einen intensiven Stoffaustausch zwischen der aufsteigenden Gasphase und dem jeweiligen Kondensat 54, 53, 52, 51 herstellen. Kondensat 54 des zweiten Abschnitts 703 kann des Weiteren in den untersten Abschnitt 704 gegeben werden, in dem sich der atmosphärische Rest der Kolonne 3 sammelt.

Das Sumpfprodukt der Kolonne 3, d.h., der atmosphärische Rest R' des Rohölstromes R wird erneut mittels einer Heizvorrichtung 41 erhitzt und in den untersten Abschnitt 803 der Kolonne 3 zur Vakuumdestillation gegeben. Hierbei steigt die gasförmige Phase des atmosphärischen Rests R' durch Kaminböden 702, 701, 700 in die einzelnen Abschnitte 802, 801, 800 der Kolonne 4 auf, insbesondere bei einem Kolonnendruck im Bereich von 10mbar bis 30mbar, wobei in den einzelnen Abschnitten die entsprechenden Kondensate 63, 62, 61 anfallen, bei denen es sich um Schweröle handelt. Im Sumpf der Kolonne 4 fällt als Vakuumrest R" Teer und Bitumen an. Die einzelnen Kondensate 63, 62, 61 können über Wärmetauscher 6 abgekühlt werden und teilweise in die Kolonne 4 zurückgegeben werden, wo sie in dem jeweiligen Abschnitt 802, 801, 800 mittels Flüssigkeitsverteilern 200 nach Art der Figuren 8 bis 13 auf die wie vorstehend beschrieben übereinander angeordneten erfindungsgemäßen Stoffaustauschböden 100 gegeben werden.

**Bezugszeichenliste**

| | |
|---|---|
| 1 | Ölwaschkolonne |
| 2 | Wasserquenchkolonne |
| 3 | Kolonne zur atmosphärischen Destillation |
| 4 | Kolonne zur Vakuumdestillation |
| 5, 6 | Wärmetauscher |
| 10 | Mantel |
| 11 | Kopf |
| 12 | Sumpf |
| 20, 21, 22 | Abschnitte einer Kolonne |
| 40, 41 | Heizvorrichtungen |
| 50 | Gasphase |
| 51, 52, 53, 54 | Kondensate |
| 61, 62, 63 | Kondensate |
| 100 | Stoffaustauschboden |
| 101 | Ablaufelement |
| 101a, 101b | Segmente |
| 101c | Kappe |
| 101d | Endbereich |
| 102, 103 | Schenkel |
| 102a, 103a | Ablaufflächen |
| 104 | Kante |
| 110 | Tragring |
| 111 | Lager |
| 112 | Träger |
| 112a | Oberfläche |
| 113 | Endbereich |
| 115 | Abdeckblech |
| 200 | Flüssigkeitsverteiler |
| 201 | Auslässe |
| 202 | Endverteilerkanal |
| 203 | Boden |
| 204 | Seitenwand |
| 205 | Rand |
| 206 | Unterkante |
| 210 | Vorverteilerkanal |
| 211 | Boden |
| 212 | Seitenwand |
| 213 | Rand |
| 214 | Auslass |
| 215 | Ausgleichskanal |
| 216 | Leitblech |
| 217 | Unterkante |
| 220 | Einspeiserohr |
| 221 | Auslass |
| 222 | Spritzblech |
| 300 | Flüssigkeitsverteiler |
| 301 | Auslass |
| 302 | Endverteilerkanal |
| 303 | Wandung |
| 310 | Vorverteilerkanal |
| 311 | Wandung |
| 311b | Unterer Bereich |
| 315 | Flanschverbindung |
| 316, 317 | Entlüftungsöffnung |
| 318, 321 | Endabschnitt |
| 320 | Zulaufrohr |
| 322 | Wandung |
| 322b | Unterer Bereich |
| 400, 401, 402, 403 | Ventilböden |
| 404 | Ablauf |
| 405 | Mannloch |
| 501 | Abscheider |
| 502 | Düsen |
| 504 | Flüssigkeitsverteiler |
| 505 | Mannloch |
| 506 | Bettbegrenzer |
| 507 | Düsen |
| 508 | Trägerplatte |
| 509 | Schüttung |
| 520 | Kaminboden |
| 521 | Kamin |
| 522 | Kaminboden |
| 523 | Kamin |
| 530 | Gasverteilerrohr |
| A, T | Stutzen |
| B, B' | Winkel |
| F, F', F" | Flüssige Phase bzw. Waschmittel |
| F‴ | Wasser |
| L | Längsachse |
| Q | Kolonnenquerschnitt |
| R | Rohölstrom |
| R' | Atmosphärischer Rest |
| R" | Vakuumrest |
| S | Spaltgas |
| U | Umfangsrichtung |
| W | Waschöl |

## Patentansprüche

1. Kolonne, mit:
- einem entlang einer Längsachse (L) erstreckten Mantel (10), der einen Innenraum der Kolonne (1, 2, 3, 4) umschließt,
- zumindest einem Stoffaustauschboden (100), der sich entlang eines quer zur Längsachse (L) verlaufenden Kolonnenquerschnitts (Q) der Kolonne (1, 2, 3, 4) erstreckt,
- zumindest einem Flüssigkeitsverteiler (200, 300), der dazu ausgebildet ist, den mindestens einen Stoffaustauschboden (100) mit einer flüssigen Phase (F) zu beaufschlagen,
- wobei der Stoffaustauschboden (100) eine Mehrzahl an parallel und beabstandet zueinander verlaufenden Ablaufelementen (101) aufweist, die sich jeweils entlang des Kolonnenquerschnitts (Q) erstrecken, wobei die Ablaufelemente (101) jeweils eine erste und eine zweite entlang des Kolonnenquerschnitts (Q) erstreckte Ablauffläche (102a, 103a) aufweisen, und wobei die beiden Ablaufflächen (102a, 103a) entlang der Längsachse (L) in Richtung auf den Flüssigkeitsverteiler (200, 300) aufeinander zu laufen und unter Ausbildung einer entlang des Kolonnenquerschnitts (Q) erstreckten Kante (104) aufeinandertreffen, und
- wobei der Flüssigkeitsverteiler (200, 300) dazu ausgebildet ist, die flüssige Phase (F) auf die Kanten (104) der Ablaufelemente (101) aufzugeben, so dass die auf das jeweilige Ablaufelement (101) aufgegebene flüssige Phase (F) zu beiden Seiten der jeweiligen Kante (104) über die Ablaufflächen (102a, 103a) vom jeweiligen Ablaufelement (101) abfließt, und
- wobei der Flüssigkeitsverteiler (200, 300) eine Mehrzahl an Auslässen (201, 301) aufweist, durch die hindurch die flüssige Phase (F) auf die Kanten (104) der Ablaufelemente (101) aufgebbar ist, wobei die Auslässe (201, 301) jeweils lotrecht oberhalb einer Kante (104) eines zugeordneten Ablaufelementes (101) angeordnet sind, und
- wobei der Flüssigkeitsverteiler (200, 300) eine Mehrzahl an Endverteilerkanälen (202, 302) aufweist, die sich jeweils entlang des besagten Kolonnenquerschnitts (Q) sowie quer zu den Ablaufelementen (101) erstrecken, wobei
(a) die Endverteilerkanäle (202) jeweils einen entlang des Kolonnenquerschnitts (Q) erstreckten Boden (203) und zwei davon abgehende Seitenwände (204) aufweisen, wobei die besagten Seitenwände (204) jeweils einen oberen Rand (205) aufweisen, und wobei die Auslässe (201) in Form von Ausnehmungen an den beiden oberen Rändern (205) ausgebildet sind,
oder
(b) die Endverteilerkanäle (302) rohrförmig ausgebildet sind und eine umlaufende Wandung (303) aufweisen, wobei die besagten Auslässe (301) der Endverteilerkanäle (302) als Durchgangsöffnungen in diesen Wandungen (303) ausgebildet sind.

2. Kolonne nach Anspruch 1, **dadurch gekennzeichnet, dass** die Ablaufelemente (101) die Form von Winkelprofilen aufweisen.

3. Kolonne nach Anspruch 1 oder 2 in der Ausgestaltung gemäß Variante (a) von Anspruch 1, **dadurch gekennzeichnet, dass** der Flüssigkeitsverteiler (200) zumindest zwei zueinander parallele, entlang der Längsachse (L) oberhalb der Endverteilerkanäle (202) angeordnete Vorverteilerkanäle (210) zum Speisen der Endverteilerkanäle (202) mit der flüssigen Phase (F) aufweist.

4. Kolonne nach Anspruch 3 in der Ausgestaltung gemäß Variante (a) von Anspruch 1, **dadurch gekennzeichnet, dass** die Vorverteilerkanäle (210) jeweils einen entlang des Kolonnenquerschnitts (Q) erstreckten Boden (211) und zwei davon abgehende Seitenwände (212) aufweisen, wobei die besagten Seitenwände (212) jeweils einen oberen Rand (213) aufweisen, an denen Auslässe (214) in Form Ausnehmungen ausgebildet sind, über die die flüssige Phase (F) in jeweils einen zugeordneten Endverteilerkanal (202) einleitbar ist.

5. Kolonne nach Anspruch 4 in der Ausgestaltung gemäß Variante (a) von Anspruch 1, **dadurch gekennzeichnet, dass** jene Auslässe (214) der Vorverteilerkanäle (210) jeweils lotrecht oberhalb eines zugeordneten Endverteilerkanals (202) angeordnet sind.

6. Kolonne nach einem der Ansprüche 3 bis 5 in der Ausgestaltung gemäß Variante (a) von Anspruch 1, **dadurch gekennzeichnet, dass** die Vorverteilerkanäle (210) über zumindest einen Ausgleichskanal (215) miteinander verbunden sind.

7. Kolonne nach einem der vorhergehenden Ansprüche, **dadurch gekennzeichnet, dass** die Kolonne (1, 2, 3, 4) zumindest einen ersten und einen zweiten Abschnitt (20, 21, 22) aufweist, wobei der mindestens eine Stoffaustauschboden (100) und jener mindestens eine Flüssigkeitsverteiler (200, 300) in dem zweiten Abschnitt (21) angeordnet sind.

8. Kolonne nach Anspruch 7, **dadurch gekennzeichnet, dass** im ersten Abschnitt (20) eine Stoffaustauschvorrichtung vorgesehen ist, die als ein Siebboden, ein Ventilboden, eine Gitterpackung, eine strukturierte Packung, oder eine regellosen Füllkörperschüttung ausgebildet ist.

9. Kolonne nach einem der vorhergehenden Ansprüche, **dadurch gekennzeichnet, dass** die Ablaufelemente (101) als gleichschenkelige Winkelprofile ausgebildet sind, wobei je zwei benachbarte Ablaufelemente (101) eine längliche Durchgangsöffnung definieren, durch die hindurch eine gasförmige Phase in der Kolonne aufsteigen kann.

10. Verwendung einer Kolonne nach einem der vorhergehenden Ansprüche in der Ausgestaltung gemäß Variante (a) von Anspruch 1 als eine Ölwaschkolonne, in der ein Spaltgas (S) abgekühlt sowie eine Kohlenwasserstofffraktion vom Spaltgas (S) abgetrennt wird, wobei eine flüssige Phase (F, F') mit dem Flüssigkeitsverteiler (200) in Form einer flüssigen Kohlenwasserstoffphase auf die Kanten (104) jener Ablaufelemente (101) aufgegeben wird, um ein im Gegenstrom geführtes Spaltgas (S) mit jener flüssigen Phase (F) zu beaufschlagen.

11. Verwendung einer Kolonne nach einem der Ansprüche 1, 2 oder nach einem der Ansprüche 7 bis 9 in Kombination mit einem der Ansprüche 1 oder 2, in der Ausgestaltung gemäß Variante (b) von Anspruch 1 als eine Wasserquenchkolonne (2), in der ein Spaltgas (S) mit einer Wasser aufweisenden oder durch Wasser gebildeten flüssigen Phase (F) beaufschlagt wird, wobei mit dem Flüssigkeitsverteiler (300) jene Wasser aufweisende oder durch Wasser gebildete, flüssige Phase (F) auf die Kanten (104) jener Ablaufelemente (101) aufgegeben wird, um das im Gegenstrom geführte Spaltgas (S) mit dieser flüssigen Phase (F) zu beaufschlagen.

12. Verwendung einer Kolonne (3) nach einem der Ansprüche 1 bis 9 in der Ausgestaltung gemäß Variante (a) von Anspruch 1 zur atmosphärischen Destillation eines Rohölstromes (R).

13. Verwendung einer Kolonne nach einem Ansprüche 1 bis 9 in der Ausgestaltung gemäß Variante (a) von Anspruch 1 zur Vakuumdestillation eines Rohölstromes (R).

14. Verwendung einer Kolonne nach einem der Ansprüche 1 bis 9 in der Ausgestaltung gemäß Variante (a) von Anspruch 1 zur Vakuumdestillation eines Sumpfproduktes einer atmosphärischen Destillation eines Rohölstromes (R).

## Claims

1. Column, comprising:
- a jacket (10) extending along a longitudinal axis (L) and encompassing an interior of the column (1, 2, 3, 4),
- at least one mass transfer tray (100), which extends along a column cross section (Q) of the column (1, 2, 3, 4) running transversely to the longitudinal axis (L),
- at least one liquid distributor (200, 300) designed to apply a liquid phase (F) to the at least one mass transfer tray (100),
- wherein the mass transfer tray (100) comprises a plurality of drain elements (101) running parallel to and spaced apart from one another which each extend along the column cross section (Q), wherein the drain elements (101) each have a first and a second drainage surface (102a, 103a) extending along the column cross section (Q), and wherein the two drainage surfaces (102a, 103a) converge along the longitudinal axis (L) in the direction of the liquid distributor (200, 300) and meet to form an edge (104) extending along the column cross section (Q), and
- wherein the liquid distributor (200, 300) is designed to provide the liquid phase (F) to the edges (104) of the drain elements (101) so that the liquid phase (F) applied to the respective drain element (101) on both sides of the respective edge (104) flows off from the respective drain element (101) via the drainage surfaces (102a, 103a), and
- wherein the liquid distributor (200, 300) comprises a plurality of outlets (201, 301) through which the liquid phase (F) can be provided to the edges (104) of the drain elements (101), wherein the outlets (201, 301) in each case are arranged perpendicularly above an edge (104) of an associated drain element (101), and
- wherein the liquid distributor (200, 300) comprises a plurality of end distributor channels (202, 302) which each extend along said column cross section (Q) and transversely to the drain elements (101), wherein
(a) the end distributor channels (202) each comprise a bottom (203) extending along the column cross section (Q) and two side walls (204) departing therefrom, wherein said side walls (204) each comprise an upper edge (205), and wherein the outlets (201) are in the form of recesses at the two upper edges (205),
or
(b) the end distributor channels (302) are tubular and comprise a circumferential wall (303), wherein said outlets (301) of the end distributor channels (302) are designed as through-openings in said walls (303).

2. Column according to claim 1, **characterized in that** the drain elements (101) are in the shape of angled profiles.

3. Column according to claim 1 or 2 in the embodiment according to variant (a) of claim 1, **characterized in that** the liquid distributor (200) comprises at least two pre-distributor channels (210) arranged in parallel along the longitudinal axis (L) above the end distributor channels (202) for feeding the liquid phase (F) to the end distributor channels (202).

4. Column according to claim 3 in the embodiment according to variant (a) of claim 1, **characterized in that** the pre-distributor channels (210) each comprise a bottom (211) extending along the column cross section (Q) and two side walls (212) departing therefrom, wherein said sidewalls (212) each comprise an upper edge (213) on which outlets (214) are designed in the form of recesses via which the liquid phase (F) can be introduced into an associated end distributor channel (202) in each case.

5. Column according to claim 4 in the embodiment according to variant (a) of claim 1, **characterized in that** said outlets (214) of the pre-distributor channels (210) are each arranged perpendicularly above an associated end distributor channel (202).

6. Column according to claims 3 to 5 in the embodiment according to variant (a) of claim 1, **characterized in that** the pre-distributor channels (210) are connected to each other via at least one compensation channel (215).

7. Column according to any one of the preceding claims, **characterized in that** the column (1, 2, 3, 4) comprises at least a first and a second portion (20, 21, 22), wherein the at least one mass transfer tray (100) and said at least one liquid distributor (200, 300) are arranged in the second portion (21).

8. Column according to claim 7, **characterized in that** in the first portion (20) a mass transfer device is provided which is designed as a sieve base, a valve base, a lattice packing, a structured packing, or an irregular packed bed.

9. Column according to any one of the preceding claims, **characterized in that** the drain elements (101) are designed as isosceles angled profiles, wherein two adjacent drain elements (101) each define an elongated through opening through which a gaseous phase can rise in the column.

10. Use of a column according to any one of the preceding claims in the embodiment according to variant (a) of claim 1 as an oil scrubbing column in which a cracked gas (S) is cooled and a hydrocarbon fraction is separated off from the cracked gas (S), wherein a liquid phase (F, F') in the form of a liquid hydrocarbon phase is provided to the edges (104) of said drain elements (101) by the liquid distributor (200) in order to apply said liquid phase (F) to the cracked gas (S) conducted in the counterflow.

11. Use of a column according to any one of claims 1, 2 or according to any one of claims 7 to 9 in combination with any one of claims 1 or 2 in the embodiment according to variant (b) of claim 1 as a water quench column (2) in which a liquid phase (F) comprising water or formed by water is applied to a cracked gas (S), wherein said liquid phase (F) comprising water or formed by water is provided to the edges (104) of said drain elements (101) using the liquid distributor (300) in order to apply said liquid phase (F) to the cracked gas (S) conducted in the counterflow.

12. Use of a column (3) according to any one of claims 1 to 9 in the embodiment according to variant (a) of claim 1 for atmospheric distillation of a crude oil stream (R).

13. Use of a column according to any one of claims 1 to 9 in the embodiment according to variant (a) of claim 1 for the vacuum distillation of a crude oil stream (R).

14. Use of a column according to any one of claims 1 to 9 in the embodiment according to variant (a) of claim 1 for the vacuum distillation of a bottom product of an atmospheric distillation of a crude oil stream (R).

## Revendications

1. Colonne, comprenant :
- une enveloppe (10) s'étendant le long d'un axe longitudinal (L), qui entoure un espace intérieur de la colonne (1, 2, 3, 4),
- au moins un plateau d'échange de matière (100) qui s'étend le long d'une section transversale de colonne (Q) de la colonne (1, 2, 3, 4) s'étendant transversalement à l'axe longitudinal (L),
- au moins un distributeur de liquide (200, 300), lequel est conçu pour appliquer une phase liquide (F) sur l'au moins un plateau d'échange de matière (100).
- le plateau d'échange de matière (100) présentant une pluralité d'éléments d'écoulement (101) parallèles et espacés les uns des autres, qui s'étendent respectivement le long de la section transversale de colonne (Q), les éléments d'écoulement (101) présentant respectivement une première et une seconde surface d'écoulement (102a, 103a) s'étendant le long de la section transversale de colonne (Q), et les deux surfaces d'écoulement (102a, 103a) convergeant l'une vers l'autre le long de l'axe longitudinal (L) en direction du distributeur de liquide (200, 300) et se rejoignant en formant une arête (104) s'étendant le long de la section transversale de colonne (Q), et
- le distributeur de liquide (200, 300) étant conçu pour appliquer la phase liquide (F) sur les arêtes (104) des éléments d'écoulement (101), de sorte que la phase liquide (F) appliquée sur l'élément d'écoulement (101) respectif s'écoule des deux côtés de l'arête (104) respective sur les surfaces d'écoulement (102a, 103a) de l'élément d'écoulement (101) respectif, et
- le distributeur de liquide (200, 300) présentant une pluralité de sorties (201, 301) à travers lesquelles la phase liquide (F) peut être déposée sur les arêtes (104) des éléments d'écoulement (101), les sorties (201, 301) étant disposées respectivement verticalement au-dessus d'une arête (104) d'un élément d'écoulement (101) associé, et
- le distributeur de liquide (200, 300) comprenant une pluralité de canaux de distribution terminaux (202, 302) s'étendant respectivement le long de ladite section transversale de colonne (Q) et transversalement par rapport aux éléments d'écoulement (101),
(a) les canaux de distribution terminaux (202) comprenant respectivement un fond (203) s'étendant le long de la section transversale de colonne (Q) et deux parois latérales (204) s'étendant à partir de celui-ci, lesdites parois latérales (204) comprenant respectivement un bord supérieur (205), et les sorties (201) étant formées sous la forme d'évidements sur les deux bords supérieurs (205),
ou
(b) les canaux de distribution terminaux (302) étant de forme tubulaire et présentant une paroi périphérique (303), lesdites sorties (301) des canaux de distribution terminaux (302) étant formées comme des orifices de passage dans ces parois (303).

2. Colonne selon la revendication 1, **caractérisée en ce que,** les éléments d'écoulement (101) présentent la forme de cornières.

3. Colonne selon la revendication 1 ou 2 dans la configuration selon la variante (a) de la revendication 1, **caractérisée en ce que** le distributeur de liquide (200) présente au moins deux canaux de prédistribution (210) parallèles entre eux, disposés le long de l'axe longitudinal (L) au-dessus des canaux de distribution terminaux (202) pour alimenter les canaux de distribution terminaux (202) avec la phase liquide (F).

4. Colonne selon la revendication 3 dans la configuration selon la variante (a) de la revendication 1, **caractérisée en ce que** les canaux de prédistribution (210) présentent respectivement un fond (211) s'étendant le long de la section transversale de colonne (Q) et deux parois latérales (212) qui en partent, lesdites parois latérales (212) présentant chacune un bord supérieur (213) sur lequel sont formées des sorties (214) sous forme d'évidements par lesquelles la phase liquide (F) peut être introduite dans un canal de distribution terminal (202) respectif associé.

5. Colonne selon la revendication 4 dans la configuration selon la variante (a) de la revendication 1, **caractérisée en ce que** ces sorties (214) des canaux de prédistribution (210) sont disposées respectivement verticalement au-dessus d'un canal de distribution terminal (202) associé.

6. Colonne selon l'une quelconque des revendications 3 à 5 dans la configuration selon la variante (a) de la revendication 1, **caractérisée en ce que** les canaux de prédistribution (210) sont reliés entre eux par au moins un canal d'équilibrage (215).

7. Colonne selon l'une quelconque des revendications précédentes, **caractérisée en ce que** la colonne (1, 2, 3, 4) présente au moins une première et une seconde section (20, 21, 22), ledit au moins un plateau d'échange de matière (100) et ledit au moins un distributeur de liquide (200, 300) étant disposés dans la seconde section (21).

8. Colonne selon la revendication 7, **caractérisée en ce qu'**un dispositif d'echange de matières est prévu dans la première section (20), lequel est formé comme un fond de tamis, un fond de vanne, un garnissage en grille, un garnissage structuré ou un garnissage en vrac.

9. Colonne selon l'une quelconque des revendications précédentes, **caractérisée en ce que** les éléments d'écoulement (101) sont formés commes des cornières isocèles, deux éléments d'écoulement (101) adjacents définissant un orifice de passage allongé à travers lequel une phase gazeuse peut monter dans la colonne.

10. Utilisation d'une colonne selon l'une quelconque des revendications précédentes dans la configuration selon la variante (a) de la revendication 1 comme colonne de lavage d'huile, dans laquelle un gaz de craquage (S) est refroidi ainsi qu'une fraction d'hydrocarbures est séparée du gaz de craquage (S), une phase liquide (F, F') étant appliquée par le distributeur de liquide (200) sous la forme d'une phase liquide d'hydrocarbures sur les arêtes (104) desdits éléments d'écoulement (101) pour alimenter un gaz de craquage (S) guidé à contre-courant avec la phase liquide (F).

11. Utilisation d'une colonne selon l'une quelconque des revendications 1, 2 ou selon l'une quelconque des revendications 7 à 9 en combinaison avec l'une quelconque des revendications 1 ou 2, dans la configuration selon la variante (b) de la revendication 1 comme colonne de trempe à l'eau (2), dans laquelle un gaz de craquage (S) est alimenté avec une phase liquide (F) présentant de l'eau ou formée par de l'eau, cette phase liquide (F) présentant de l'eau ou formée par de l'eau étant appliquée avec le distributeur de liquide (300) sur les arêtes (104) de ces éléments d'écoulement (101) afin d'alimenter le gaz de craquage (S) guidé à contre-courant avec cette phase liquide (F).

12. Utilisation d'une colonne (3) selon l'une quelconque des revendications 1 à 9 dans la configuration selon la variante (a) de la revendication 1 pour la distillation atmosphérique d'un courant de pétrole brut (R).

13. Utilisation d'une colonne selon l'une quelconque des revendications 1 à 9 dans la configuration selon la variante (a) de la revendication 1 pour la distillation sous vide d'un courant de pétrole brut (R).

14. Utilisation d'une colonne selon l'une quelconque des revendications 1 à 9 dans la configuration selon la variante (a) de la revendication 1 pour la distillation sous vide d'un produit de fond de colonne d'une distillation atmosphérique d'un courant de pétrole brut (R).
